# EUROPÄISCHE PATENTSCHRIFT

(11) **EP 3 589 859 B1**
(45) Veröffentlichungstag und Bekanntmachung des Hinweises auf die Patenterteilung: **12.05.2021**
(21) Anmeldenummer: 18709514.6
(22) Anmeldetag: 01.03.2018
(51) Int. Cl.: F16D 65/56, F16D 65/74

(54) **SCHEIBENBREMSE MIT EINER NACHSTELLVORRICHTUNG UND VERFAHREN ZUM EINSTELLEN EINES LÜFTSPIELS EINER SOLCHEN SCHEIBENBREMSE**
DISC BRAKE HAVING AN ADJUSTER DEVICE AND METHOD FOR ADJUSTING A CLEARANCE OF A DISC BRAKE OF THIS TYPE
FREIN À DISQUE AVEC UN DISPOSITIF DE RÉGLAGE ET PROCÉDÉ POUR LE RÉGLAGE D'UNE DISTANCE DE DÉGAGEMENT D'UN TEL FREIN À DISQUE

(30) Priorität: 03.03.2017 DE 102017104443
(43) Veröffentlichungstag der Anmeldung: 08.01.2020
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE)
(86) Internationale Anmeldenummer: PCT/EP2018/055081
(87) Internationale Veröffentlichungsnummer: WO 2018/158386

(56) Entgegenhaltungen:
- EP-A1- 1 546 571
- DE-A1- 4 017 065
- GB-A- 2 155 126

## Beschreibung

Die Erfindung betrifft eine Scheibenbremse mit einer Nachstellvorrichtung nach dem Oberbegriff des Anspruchs 1. Die Erfindung bezieht sich auch auf ein Verfahren zum Einstellen eines Lüftspiels einer solchen Scheibenbremse.

Fahrzeuge, insbesondere Kraftfahrzeuge, sind mit Reibungsbremsen ausgestattet, um kinetische Energie umzuwandeln. Bevorzugt wird dabei speziell im Personenkraftwagen- und im Nutzfahrzeugbereich die Scheibenbremse. Pneumatisch betätigte Scheibenbremsen gehören mittlerweile zur Standardausrüstung bei schweren Nutzfahrzeugen.

Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft, z.B. über Gewindespindeln, auf Bremsbeläge und Bremsscheibe übertragen, wobei z.B. über die Gewindespindeln der Verschleiß von Bremsscheibe und Bremsbelägen ausgeglichen wird.

Die Zuspannkräfte wirken über beide Bremsbeläge auf die Bremsscheibe. Da die Beläge konstruktiv als Verschleißteile ausgelegt werden, sind diese generell weicher als die Bremsscheibe, d.h. die Beläge erfahren über Ihre Gebrauchsdauer eine Änderung der Belagstärke, sie verschleißen. Auch die Bremsscheibe kann verschleißen. Aus diesem Verschleiß ergibt sich die Notwendigkeit, dass eine Verschleißnachstellung die durch den Verschleiß verursachten Änderungen ausgleicht und ein vorher festgelegtes Lüftspiel, das auch als Nominallüftspiel bezeichnet wird, wieder einstellt.

Derartige Scheibenbremsen sind daher zum Ausgleich des Belagverschleißes mit einem automatisch wirkenden Verschleißnachsteller ausgerüstet. Diese rein mechanisch wirkenden Verschleißnachsteller weisen nur eine Wirkrichtung auf. Das bedeutet, dass der Belagverschleiß, welcher während der Betriebszeit auftritt, ausgeglichen wird. Der Nachsteller ist also in der Lage ein zu großes Lüftspiel durch eine Zustellbewegung auszugleichen. Unter Lüftspiel versteht man den Spalt zwischen den Bremsbelägen und der Bremsscheibe im nicht betätigten Zustand. Für den sicheren Betrieb der Bremse ist ein korrekt eingestelltes Lüftspiel sehr wichtig.

Eine Veränderung des Lüftspiels kann auch durch weitere Effekte verursacht werden. Wie bereits oben beschreiben, kann sich eine Vergrößerung des Lüftspiels durch das Auftreten von Belagverschleiß ergeben. Eine weitere Möglichkeit zur Veränderung des Lüftspiels ergibt sich durch die Rüttelbeanspruchung der Bremse im praktischen Fahrzeugeinsatz. Dabei kann es sowohl zu einer Vergrößerung als auch zu einer Verkleinerung des Lüftspiels kommen.

Ferner kann es zur Verkleinerung des Lüftspiels durch das so genannte Belagwachsen kommen. Darunter ist eine Dickenzunahme des Reibbelags z.B. nach einer längeren Phase hoher Druckbeanspruchung und anschließender Entlastung zu verstehen. Im lastfreien Zustand nimmt der Reibbelag mit zeitlichem Verzug die Dicke vor der hohen Druckbeanspruchung an und bewirkt somit eine Reduzierung des Lüftspiels.

Eine dynamisch bedingte Vergrößerung des Lüftspiels kann durch den Verschleißnachsteller ausgeglichen werden und stellt somit kein besonderes Problem für einen sicheren Betrieb der Bremse dar.

Im Gegensatz dazu können Lüftspielreduzierungen von den derzeit zur Anwendung kommenden mechanischen Verschleißnachstellersystemen nicht korrigiert werden. Eine Reduzierung des Lüftspiels kann zu einer erheblichen Beeinträchtigung des Betriebsverhaltens der Bremse führen, wie z.B. erhöhtes Restschleifmoment oder Heißlaufen der Bremse.

Bei den derzeit in pneumatisch betätigten Scheibenbremsen zur Anwendung kommenden Nachstellern handelt es sich um Systeme, die bei der Betätigung der Bremse durch den Bremshebel oder von einem ähnlichen, zur Erzeugung der Zuspannkraft erforderlichen Bauteil, aktiviert werden. Der Nachstellvorgang erfolgt also in Abhängigkeit von der Bremsbetätigung. Ein typisches Merkmal dieser Nachstellsysteme ist die asymptotische Wirkungsweise. Damit ist gemeint, dass der Nachstellweg von der Größe der Lüftspielabweichung abhängig ist. Der Nachstellschritt je Betätigung beträgt im Allgemeinen zwischen 10 und 20% der Lüftspielabweichung. Bei großer Abweichung erfolgt ein größerer Nachstellschritt, während bei einer kleinen Abweichung ein entsprechend kleiner Nachstellschritt stattfindet. Eine Lüftspielkorrektur in einem einzigen Schritt ist bei diesen Nachstellkonzepten nicht möglich. Ferner ist eine Lüftspielkorrektur von einem zu kleinen Wert auf einen größeren Wert mit diesen Nachstellerkonzepten kaum oder nur sehr schwierig realisierbar.

Ein anderes Nachstellerkonzept ist eine von der Betätigung der Bremse entkoppelte Nachstellung. In diesem Fall erfolgt die Nachstellung nicht während einer Bremsbetätigung sondern unabhängig zwischen den Bremsbetätigungen, vorzugsweise in Abhängigkeit von der Lüftspielsituation, wie z.B. EP 1 546 571 B1 beschreibt. Für diese Art der Nachstellung sind allerdings ein eigener Aktuator und eine eigene Energieversorgung (z.B. Druckluft) erforderlich. Im Unterschied zum vorher beschriebenen Nachstellprinzip zeichnet sich dieses System durch eine einstufige Wirkungsweise aus. Damit ist gemeint, dass die Lüftspielabweichung durch einen einzigen Nachstellschritt ausgeglichen wird.

Zur Aktivierung der Nachstellung wird dabei der Nachstellkolben mit einem Druckmedium beaufschlagt und dadurch in Richtung Bremsscheibe verschoben. In der ersten Phase der

Bewegung wird das Spiel im Gewindetrieb ausgeglichen. Durch das Gewindespiel wird die Größe des konstruktiven Lüftspiels definiert. Wenn das Lüftspiel zu groß ist, wird der Nachstellkolben weiter in Richtung Bremsscheibe geschoben, da nun das Spiel im Gewindetrieb überwunden ist, kommt es aufgrund der selbsthemmungsfreien Auslegung des Gewindetriebs zu einer Verdrehung der Stellspindel und somit zu einer Korrektur des Lüftspiels. Durch das im Anschluss stattfindende Entlüften des Nachstellkolbens kann dieser in seine Ruhestellung zurückkehren. Dabei wird die Stellspindel mittels Kolbendichtung und dem so genannten "Pull Back" Effekt innerhalb des Gewindespiels ebenfalls in seine Ruhelage gebracht und das konstruktive Lüftspiel dadurch eingestellt.

Gegenüber dem vorher beschriebenen Nachstellprinzip besitzt dieses System den Vorteil, dass es möglich ist z.B. einen pneumatisch betätigten Festsattel zu konzipieren, der auch auf der Reaktionsseite (Felgenseite) mit einer derartigen Nachstellvorrichtung ausgerüstet ist (siehe EP 1 546 571 B1).

Mit diesem eben beschriebenen Nachstellerprinzip ist es jedoch ebenfalls nicht möglich zu kleine Lüftspiele zu korrigieren. Ein weiterer Problempunkt liegt in der Genauigkeit der Nachstellung. Da das Lüftspiel durch das Spiel im Gewindetrieb definiert wird, ist die Einhaltung einer engen Fertigungstoleranz erforderlich. Im Rahmen einer kostengünstigen Großserienfertigung ist es jedoch schwierig, das axiale Gewindespiel bei einem Steilgewinde innerhalb eines engen Toleranzfensters zu halten.

Daher besteht die Aufgabe der vorliegenden Erfindung darin, eine verbesserte Nachstellvorrichtung zu schaffen, welche die oben genannten Nachteile behebt oder zumindest erheblich verhindert.

Eine weitere Aufgabe ist, ein verbessertes Verfahren zum Einstellen eines Lüftspiels für eine Scheibenbremse bereitzustellen.

Diese Aufgabe wird durch eine Scheibenbremse mit den Merkmalen des Anspruchs 1 gelöst.

Die weitere Aufgabe wird durch ein Verfahren mit den Merkmalen des Anspruchs 26 gelöst.

Eine erfindungsgemäße Scheibenbremse, vorzugsweise druckluftbetätigt, insbesondere für ein Kraftfahrzeug, umfasst eine Bremsscheibe, einen die Bremsscheibe übergreifenden Bremssattel, in welchem eine Zuspannvorrichtung angeordnet ist, wobei beiderseits der Bremsscheibe jeweils ein Bremsbelag vorgesehen ist, und eine Nachstellvorrichtung mit mindestens einer Nachstelleinrichtung zur Nachstellung eines Reibflächenverschleißes an Bremsbelägen und Bremsscheibe, wobei die mindestens eine Nachstelleinrichtung unabhängig von der Zuspanneinrichtung mit einem Druckmedium betreibbar ist. Die mindestens eine Nachstelleinrichtung ist mit einer ersten Zylindereinheit mit einem ersten Druckkolben und mit einer zweiten Zylindereinheit mit einem zweiten Druckkolben ausgebildet, wobei der zweite Druckkolben der zweiten Zylindereinheit einen Kolben, der mit dem Bremsbelag in Kontakt steht, und einen Nachstellkolben, der auf dem Kolben angeordnet ist, aufweist.

Als Ausgangsbasis dient das Prinzip der entkoppelten, einstufigen Nachstellung mit selbsthemmungsfreiem Gewindetrieb. Der Einfluss des Gewindespiels auf die Genauigkeit des Lüftspiels kann in dieser Ausführung vermieden werden.

Damit ergibt sich eine Konzeption eines mechanischen Verschleißnachstellers mit zweifacher Wirkrichtung, d.h. es wird sowohl eine Verkleinerung eines zu großen Lüftspiels als auch eine Vergrößerung eines zu kleinen Lüftspiels ermöglicht. Dies ergibt sich dadurch, dass eine Aufteilung der Nachstellfunktion in zwei unterschiedliche Aufgabenschritte erfolgt. Der erste Aufgabenschritt ist die Lüftspieleinstellung, d.h. die Einstellung eines vorher festgelegten Lüftspiels als Nominallüftspiel. Hierzu ist die erste Zylindereinheit vorgesehen. Die zweite Zylindereinheit dient zur Nachstellung in einem zweiten Aufgabenschritt.

Ein erfindungsgemäßes Verfahren zum Einstellen eines Lüftspiels einer oben beschriebenen Scheibenbremse, vorzugsweise druckluftbetätigt, insbesondere für ein Kraftfahrzeug, mit einer Bremsscheibe, einem die Bremsscheibe übergreifenden Bremssattel, in dem eine Zuspannvorrichtung angeordnet ist, wobei beiderseits der Bremsscheibe jeweils ein Bremsbelag vorgesehen ist, und mit einer Nachstellvorrichtung mit mindestens einer Nachstelleinrichtung zur Nachstellung eines Reibflächenverschleißes an Bremsbelägen und Bremsscheibe, wobei die mindestens eine Nachstelleinrichtung unabhängig von der Zuspanneinrichtung mit einem Druckmedium betreibbar ist weist die folgenden Verfahrensschritte auf.

S1 - Aktivieren der Nachstelleinrichtung durch Beaufschlagung mit einem Druckmedium und Verstellen eines Spindelkopfes der ersten Zylindereinheit ausgehend von einer Ruhestellung; S2 - Feststellen, ob der Spindelkopf eine Arbeitsendstellung in der ersten Zylindereinheit erreicht; S3 - Wiedereinstellen des vorher in der ersten Zylindereinheit konstruktiv festgelegten Lüftspiels durch die erste Zylindereinheit durch Entlüften der Nachstelleinrichtung, wenn die Arbeitsendstellung erreicht ist und der Bremsbelag bereits an der Bremsscheibe anliegt und ein aktuelles Lüftspiel zu Null geworden ist; oder S4 - Verstellen eines Kolbens und eines damit verbundenen Arbeitskolbens durch die zweite Zylindereinheit, wenn die Arbeitsendstellung erreicht ist und der Bremsbelag aufgrund eines zu großen Lüftspiels noch nicht an der Bremsscheibe anliegt; und S5 - Wiedereinstellen des vorher in der ersten Zylindereinheit konstruktiv festgelegten Lüftspiels durch die erste Zylindereinheit durch Entlüften der Nachstelleinrichtung, wenn der Bremsbelag an der Bremsscheibe anliegt und ein aktuelles Lüftspiel zu Null geworden ist; oder S6 - Weiterverstellen des Spindelkopfes aus einer Zwischenstellung durch die erste Zylindereinheit, wenn der Spindelkopf die Arbeitsendstellung noch nicht erreicht hat und der Bremsbelag aufgrund eines zu kleinen Lüftspiels an der Bremsscheibe anliegt und ein aktuelles Lüftspiel zu Null geworden ist; und S7 - Wiedereinstellen des vorher in der ersten Zylindereinheit konstruktiv festgelegten Lüftspiels durch die erste Zylindereinheit durch Entlüften der Nachstelleinrichtung, wenn der Spindelkopf die Arbeitsendstellung erreicht hat.

Die Nachstelleinrichtung wirkt somit in beide Richtungen, es können zu große und zu kleine Lüftspiele korrigiert werden. Die Lüftspielkorrektur und das Wiedereinstellen auf das zuvor festgelegte Lüftspiel erfolgt einstufig und unmittelbar nach der Aktivierung der Nachstelleinrichtung. Es wird eine vorteilhaft schnelle Korrektur ermöglicht.

In einer Ausführung ist es vorgesehen, dass ein Hub des ersten Druckkolbens der ersten Zylindereinheit einem vorher festgelegten Lüftspiel der Scheibenbremse entspricht. Auf diese Weise ist dieses Nominallüftspiel konstruktiv in der Nachstelleinrichtung integriert und dient auch gleichzeitig als Referenzgröße.

Die mindestens eine Nachstelleinrichtung umfasst ein ortsfestes Gehäuse mit einer Innenbohrung, einen Spindelkopf, eine Spindel, einen Kolben, einen Nachstellkolben und eine Dichtscheibe. So ist ein kompakter Aufbau möglich, der einen einfachen Einbau gewährleistet.

Das ortsfeste Gehäuse der mindestens einen rückenseitigen Nachstelleinrichtung kann alternativ auch ein Rückenabschnitt des Bremssattels sein, wobei die Innenbohrung in den Rückenabschnitt eingeformt ist. Dies ergibt einen platzsparenden Aufbau.

Der Vorteil eines besonders kompakten Aufbaus ist durch die Ausführung ermöglicht, in welcher die erste Zylindereinheit und die zweite Zylindereinheit in dem Gehäuse in Reihe angeordnet und durch die Dichtscheibe oder durch einen festen Zwischenboden getrennt sind.

In einer vorteilhaften Weiterbildung teilt die Dichtscheibe oder der feste Zwischenboden die Innenbohrung des Gehäuses in einen im Wesentlichen geschlossenen Raum zwischen der Dichtscheibe oder dem festen Zwischenboden und einer Bodenwand des Gehäuses und in einen offenen Raum zwischen der Dichtscheibe und einer zur Bremsscheibe weisenden Öffnung der Innenbohrung, wobei die Dichtscheibe mittels eines Dichtelementes an ihrem Außenumfang gegenüber der Innenbohrung abgedichtet ist.

In einer weiteren Ausführung ist vorgesehen, dass die erste Zylindereinheit den geschlossenen Raum und den Spindelkopf als ersten Druckkolben aufweist, wobei der Spindelkopf mit der Spindel verbunden ist, und wobei die Spindel in der zweiten Zylindereinheit mit dem zweiten Druckkolben in Eingriff steht. Der Vorteil hierbei ist eine einfache Kopplung der beiden Zylindereinheiten.

Eine noch weitere Ausführung sieht vor, dass der Spindelkopf mit einem zur Bodenwand des Gehäuses weisenden Außenkegel oder einer anderen Außenkontur versehen ist, wobei an der Innenseite der Bodenwand ein Innenkegel oder eine mit der anderen Außenkontur korrespondierende Gegenkontur angeordnet ist, welcher/welche mit dem Außenkegel oder mit der anderen Außenkontur des Spindelkopfes kommuniziert. Damit lässt sich eine Endstellung erzielen, in welcher der Außenkegel und der Innenkegel in Eingriff stehen.

In einer anderen Ausführung ist vorgesehen, dass ein Bereich zwischen dem Außenkegel oder der anderen Außenkontur des Spindelkopfes und dem Innenkegel oder der Gegenkontur des Gehäuses mittels eines Dichtelementes am Außenumfang des Spindelkopfes gegenüber der Innenwand des Gehäuses abgedichtet ist und einen Druckraum der ersten Zylindereinheit bildet, welcher mit einem Anschluss für ein Druckmedium kommuniziert. So kann die erste Zylindereinheit einfach mit einem Druckmedium beaufschlagt werden.

In einer Ausführung ist der Spindelkopf als erster Druckkolben der ersten Zylindereinheit zusammen mit der Spindel in Richtung einer Nachstellerachse aus einer Ruhestellung der Nachstelleinrichtung, in welcher der Spindelkopf mit seinem Außenkegel oder seiner anderen Außenkontur in Kontakt mit dem Innenkegel oder der Gegenkontur des Gehäuses steht, in eine Arbeitsendstellung, welche durch die Dichtscheibe festgelegt ist, und zurück längsverschiebbar ausgebildet, wobei dieser Hub des Spindelkopfes dem vorher festgelegten Lüftspiel entspricht. Auf diese Weise ist das Nominallüftspiel konstruktiv in der Nachstelleinrichtung integriert. Es ist möglich, dass das Nominallüftspiel z.B. durch Änderung der Position oder Dicke der Dichtscheibe oder z.B. durch Änderung der Längsausdehnung des Spindelkopfes andere Maße zur Anpassung an unterschiedliche Gegebenheiten erhalten kann.

In einer anderen Ausführung ist vorgesehen, dass der Spindelkopf der ersten Zylindereinheit zusammen mit der Spindel um die Nachstellerachse verdrehbar ausgebildet ist, wobei eine Verdrehbarkeit des Spindelkopfes mit der Spindel in der Ruhestellung aufgrund eines hohen Reibmomentes zwischen dem Außenkegel oder der anderen Außenkontur des Spindelkopfes und des Innenkegels oder der Gegenkontur blockiert ist. Auf diese Weise ist eine Verdrehbarkeit von Spindelkopf und Spindel vorteilhaft einfach von der Stellung des Spindelkopfes abhängig.

In weiterer Ausbildung ist der Spindelkopf durch ein axiales Wälzlager über eine Rückstellfeder an der Dichtscheibe abgestützt, wobei die Rückstellfeder eine axiale Kraft in Richtung der Nachstellerachse auf den Spindelkopf derart ausübt, dass der Spindelkopf in die Ruhestellung gedrückt ist, in welcher sein Außenkegel oder seine andere Außenkontur an dem Innenkegel oder der Gegenkontur des Gehäuses fest anliegt. Das Wälzlager ermöglicht eine Verdrehbarkeit von Spindelkopf und Spindel mit geringer Reibung. Die Rückstellfeder weist vorteilhafterweise drei Funktionen auf, nämlich die Abstützung des Wälzlagers, die Rückstellung von Spindelkopf und Spindel in die Ruhestellung und eine Erhöhung des Reibmomentes von Außenkegel des Spindelkopfes und Innenkegel des Gehäuses in der Ruhestellung durch die axiale Federkraft. Die Rückstellfeder und das axiale Wälzlager können auch als eigenständige Bauteile dargestellt werden. Der Platzbedarf ist bei dieser Ausführung im Vergleich zur vorher beschriebenen Lösung allerdings etwas größer.

In einer noch anderen Ausführung weist der Spindelkopf einen Führungsabschnitt auf, welcher sich durch eine Durchgangsbohrung der Dichtscheibe oder des Zwischenbodens erstreckt und eine Lagerung und axiale Führung für den Spindelkopf an der Dichtscheibe oder an dem Zwischenboden bildet, wobei ein Dichtelement zwischen Dichtscheibe oder Zwischenboden und Führungsabschnitt vorgesehen ist. Damit ergibt sich der Vorteil, dass Spindelkopf und Spindel durch diese Lagerung und Führung gemeinsam unterstützt werden, wobei ein kompakter Aufbau geschaffen ist.

Eine Ausführung sieht vor, dass der Spindelkopf zumindest einen Axialkanal als Überstromkanal aufweist, welcher den Druckraum der ersten Zylindereinheit mit einem Druckraum der zweiten Zylindereinheit verbindet. Dadurch kann ein kompakter Aufbau erreicht werden.

In einer weiteren Ausführung ist vorgesehen, dass die zweite Zylindereinheit den offenen Raum, den Kolben und den Nachstellkolben als zweiten Druckkolben umfasst, wobei der Kolben und der Nachstellkolben in dem offenen Raum in der Innenbohrung längsverschiebbar angeordnet sind, und wobei der Kolben zusätzlich verdrehbar ist. Die zwei Kolben ermöglichen eine Rückstellung der Nachstelleinrichtung, z.B. bei einem Bremsbelagwechsel, wobei der eine Kolben von außen verdreht werden kann und der Nachstellkolben unverdrehbar bleibt. Damit wird eine Mehrfachfunktion mit geringem Platzbedarf erzielt.

Eine noch weitere Ausführung sieht vor, dass der Druckraum der zweiten Zylindereinheit in der Innenbohrung zwischen Endabschnitten des Kolbens und des Nachstellkolbens und der Dichtscheibe oder dem Zwischenboden festgelegt ist. So kann er auf einfache Weise durch den Überströmkanal des Spindelkopfes mit dem ersten Druckraum kommunizieren und von dort mit Druckmedium beaufschlagt werden.

Weiterhin ist vorgesehen, dass der Kolben in einer Durchgangsbohrung des Nachstellkolbens koaxial zu diesem und zu der Nachstellerachse angeordnet ist, wobei der Nachstellkolben auf dem Kolben axial festgelegt und gegenüber diesem mit einem Dichtelement abgedichtet ist, und der Kolben gegenüber dem Nachstellkolben um die Nachstellerachse verdrehbar ist, wobei der Nachstellkoben gegenüber der Innenbohrung des Gehäuses durch ein Dichtelement abgedichtet ist. Damit ergibt sich ein vorteilhaft kompakter Aufbau.

In einer anderen Ausführung ist zwischen dem Kolben und dem Nachstellkolben mindestens eine Reibfeder vorgesehen, mittels welcher ein beeinflussbares Reibmoment zwischen dem Kolben und dem Nachstellkolben erzeugt wird. Somit kann der Kolben vorteilhaft nach Überwindung des Reibmomentes manuell verdreht werden, ohne dass er bei üblichem Betrieb verdreht wird.

Der Nachstellkolben ist durch mindestens ein oder mehrere als Gleitsteine ausgebildete Führungselemente gegen Verdrehen gegenüber dem ortsfesten Gehäuse gesichert. Dies ist für die Funktion des Nachstellens wichtig, wobei gleichzeitig der Kolben bei einer manuellen Rückstellung in dem Nachstellkolben verdrehbar ist.

In einer Ausführung ist vorgesehen, dass die Spindel als eine Gewindespindel mit einem Außengewinde ausgebildet ist, sich durch die Innenbohrung des Gehäuses erstreckt und mit dem Kolben über ihr Außengewinde mit einem Innengewinde des Kolbens in Eingriff steht. So kann eine vorteilhafte Kopplung der Zylindereinheiten ermöglicht werden, wobei die Spindel in den Kolben eingeschraubt ist. Mittels des Gewindes kann eine Längsbewegung des Kolbens in eine Drehbewegung der Spindel umgesetzt werden. Außerdem ist es so auch einfach möglich, dass eine Drehbewegung der Spindel eine Längsverstellung der Spindel relativ zu dem Kolben ermöglicht. Auf diese Weise kann es vorteilhaft erreicht werden, dass ein zu großes Lüftspiel verkleinert und ein zu kleines Lüftspiel vergrößert werden kann.

Hierbei ist es besonders vorteilhaft, wenn das Außengewinde der Spindel und das Innengewinde des Kolbens als selbsthemmungsfreie Gewinde ausgeführt sind.

Der Einfluss des Gewindespiels auf die Genauigkeit des Lüftspiels kann vorteilhaft dadurch vermieden werden, wenn eine Vorspannfeder zwischen der Spindel und dem Kolben vorgesehen ist, mittels welcher das Außengewinde der Spindel gegenüber dem Innengewinde des Kolbens axial vorgespannt ist.

In einer noch weiteren Ausführung erstreckt sich das Innengewinde des Kolbens von einem zur Dichtscheibe weisenden Endabschnitt des Kolbens in Richtung auf die Bremsscheibe und mündet in eine axiale Bohrung, wobei die axiale Bohrung mit einer Dichtkappe oder durch eine andere Dichtmethode druckdicht verschlossen ist. Damit wird der Druckraum der zweiten Zylindereinheit im Bereich des Gewindeeingriffs von Spindel und Kolben zur Atmosphäre hin abgedichtet. Eine Dichtwirkung kann durch eine Presspassung oder aber auch mit Hilfe eines Dichtrings erreicht werden. Die axiale Sicherung der Dichtkappe kann durch einen Sicherungsring erzielt werden.

Eine alternative Lösung hierzu wäre eine eingeschraubte Dichtkappe. Grundsätzlich sind aber auch andere, aus der Technik bekannte Dichtungs- und Sicherungsmethoden möglich (z.B. schweißen, kleben etc.).

Es ist vorteilhaft, dass der Druckraum der zweiten Zylindereinheit durch das Dichtelement zwischen dem Kolben und dem Nachstellkolben, durch das Dichtelement zwischen dem Nachstellkolben und der Innenbohrung des Gehäuses und durch die Dichtkappe in der axialen Bohrung des Kolbens gegenüber der Atmosphäre abgedichtet ist, da sich so vorteilhaft Druckverluste des Druckmediums vermeiden lassen.

Es ist weiterhin vorgesehen, dass der Kolben mit dem Bremsbelag über einen Druckabschnitt in Kontakt steht, wobei der Druckabschnitt einen umlaufenden Kragen mit einer Profilierung als ein Kraftangriff für eine manuelle Rückstellung durch Verdrehung des Kolbens aufweist. Die Profilierung dient vorteilhaft zum Ansetzen eines geeigneten Werkzeugs.

In einer Ausführung des Verfahrens erfolgt in dem Verfahrensschritt S4 eine Verkleinerung des zu großen Lüftspiels, indem eine in der Arbeitsendstellung durch den mit ihr verbundenen Spindelkopf axial blockierte Spindel sich durch die Bewegung des Kolbens und des Nachstellkolbens durch einen selbsthemmungsfreien Geweindeeingriff zwischen Spindel und Kolben um eine Nachstellerachse dreht, bis der Kolben und der Nachstellkolben den Bremsbelag zum Anliegen an der Bremsscheibe gebracht haben. Durch dieses Zusammenwirken von erster und zweiter Zylindereinheit in einem kompakten Aufbau wird das zu große Lüftspiel vorteilhaft einfach und in einem Schritt verkleinert. Hierbei wird das in der ersten Zylindereinheit konstruktiv vorher festgelegte Lüftspiel als Referenzwert dergestalt verwendet, dass die Spindel in der Arbeitsendstellung der ersten Zylindereinheit, also nach Durchlauf des vorher festgelegten Lüftspiels axial blockiert ist.

Eine weitere Ausführung des Verfahrens sieht vor, dass in dem Verfahrensschritt S6 eine Vergrößerung des zu kleinen Lüftspiels erfolgt, indem eine in der Zwischenstellung axial verstellbare Spindel durch die Bewegung des mit ihr verbundenen Spindelkopfes verstellt wird und sich durch einen Gewindeeingriff von Spindel und blockiertem Kolben dreht, bis der Spindelkopf die Arbeitsendstellung erreicht. Hier wird ebenfalls der Vorteil des selbsthemmungsfreien Gewindeeingriffs zwischen Kolben und Spindel genutzt, um die sich drehende Spindel axial zu verstellen und somit das zu kleine Lüftspiel zu vergrößern. Das in der ersten Zylindereinheit konstruktiv vorher festgelegte Lüftspiel wird auch hierbei als Referenzwert verwendet, indem der Spindelkopf die Arbeitsendstellung noch nicht erreicht hat, also das vollständige vorher festgelegte Lüftspiel noch nicht ganz durchlaufen hat.

In einer noch weiteren Ausführung wird in den Verfahrensschritten S3, S5 und S7 der Spindelkopf jeweils nach dem Entlüften aus der Arbeitsendstellung mittels einer Rückstellfeder in die Ruhestellung zurückgestellt, wobei das in der ersten Zylindereinheit konstruktiv vorher festgelegte Lüftspiel wieder eingestellt wird. Damit wird das in der ersten Zylindereinheit konstruktiv vorher festgelegte Lüftspiel eingestellt, indem der Spindelkopf aus der Arbeitsendstellung in die Ruhestellung das vorher festgelegte Lüftspiel vollständig durchläuft und somit der Nachstellkolben von der Spindel, die mit dem Spindelkopf verbunden ist, entsprechend den Bremsbelag auf das Nominallüftspiel einstellt.

Es ergeben sich somit folgende Vorteile:
- Die Nachstellung wirkt in beide Richtungen, es können somit zu große Lüftspiele als auch zu kleine Lüftspiele korrigiert werden.
- Die Lüftspielkorrektur erfolgt einstufig und unmittelbar nach der Aktivierung der Nachstellung. Dadurch kann eine Lüftspielabweichnug sehr schnell korrigiert werden und ein sicherer Betriebszustand für die Scheibenbremse kurzfristig erreicht werden.
- Die Nachstellmechanik bzw. die Nachstelleinrichtungen können in einem als Festsattel ausgebildeten Bremssattel sowohl für die rückenseitige (felgenseitige) als auch für die zuspannseitige Nachstellung verwendet werden.
- Die Maßtoleranzen üben nur einen geringen Einfluss auf das einzustellende Lüftspiel (Nominallüftspiel) aus, da
   ∘ die Gewindespieltoleranz ohne Einfluss ist.
   ∘ nur eine geringe Anzahl von Bauteilen Einfluss auf das einzustellende Lüftspiel (Nominallüftspiel) hat.
- Die Lüftspieleinstellung (Einstellung auf das Nominallüftspiel) ist unabhängig von der Bremsbetätigung und erlaubt somit eine selektive Aktivierung der Nachstellung. Die Radbremsen in einem Fahrzeug können hinsichtlich Nachstellung z.B. individuell angesteuert werden.
- Durch die Aktivierung des Nachstellmechanismus bzw. der Nachstelleinrichtungen können Zusatzfunktionen generiert werden, z.B. Säubern der Reibflächen der Bremsscheibe durch leichtes Anlegen der Beläge, Entfernen des Wasserfilms auf der Reibfläche der Bremsscheibe, etc.
- Die Nachstellung kann in Bremssätteln verwendet werden, die sowohl als Schiebe- / Schwimmsätteln als auch als Festsättel ausgebildet sind.
- Die Bremsbeläge können durch den Nachstellmechanismus aktiv zurückgestellt werden. Somit kann eine Restschleifwirkung der Bremsbeläge vermieden werden.

Die Erfindung wird nun anhand beispielhafter Ausführungen mit Bezug auf die beigefügten Zeichnungen näher erläutert. Hierbei zeigen:
- Fig. 1-2: schematische Ansichten eines Ausführungsbeispiels einer erfindungsgemäßen Scheibenbremse mit einer erfindungsgemäßen Nachstellvorrichtung;
- Fig. 3-4: schematische Teilschnittansichten des Ausführungsbeispiels nach Fig. 1;
- Fig. 5: eine schematische Schnittansicht einer Nachstelleinrichtung der erfindungsgemäßen Nachstellvorrichtung nach Fig. 3-4;
- Fig. 6-7: schematische Darstellungen der Nachstelleinrichtung nach Fig. 5;
- Fig. 8, 8a-8b: schematische Schnittansichten der Nachstelleinrichtung nach Fig. 5 in verschiedenen Betriebszuständen;

- Fig. 9, 9a-9b: schematische vergrößerte Schnittansichten eines Bereiches der Nachstelleinrichtung nach Fig. 8, 8a-8b in verschiedenen Betriebszuständen;
- Fig. 10, 10a-10c: schematische Schnittansichten der Nachstelleinrichtung nach Fig. 5 in verschiedenen Betriebszuständen;
- Fig. 11, 11a-11c: schematische Schnittansichten der Nachstelleinrichtung nach Fig. 5 in verschiedenen Betriebszuständen;
- Fig. 12, 12a-12c: schematische vergrößerte Schnittansichten eines Bereiches der Nachstelleinrichtung nach Fig. 11, 11a-11c in verschiedenen Betriebszuständen; und
- Fig. 13: ein schematisches Flussdiagramm eines Ausführungsbeispiels eines erfindungsgemäßen Verfahrens.

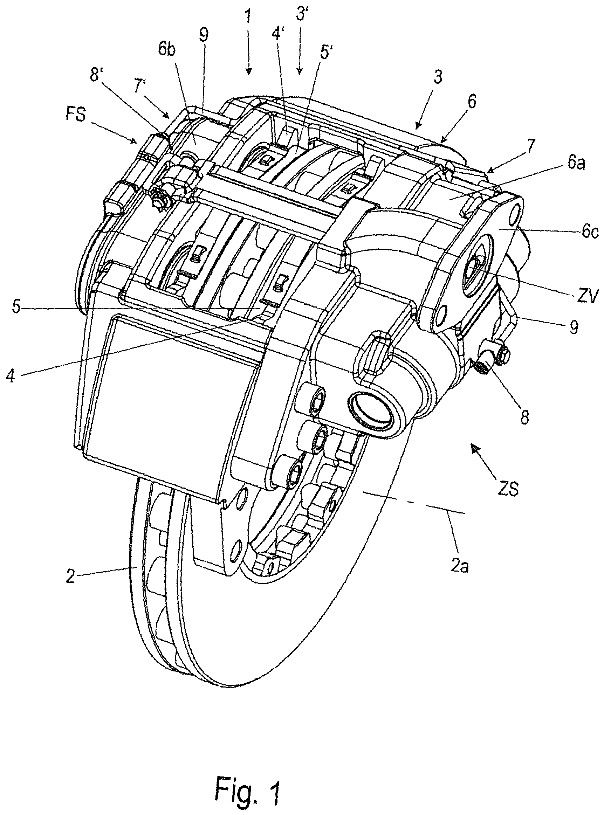

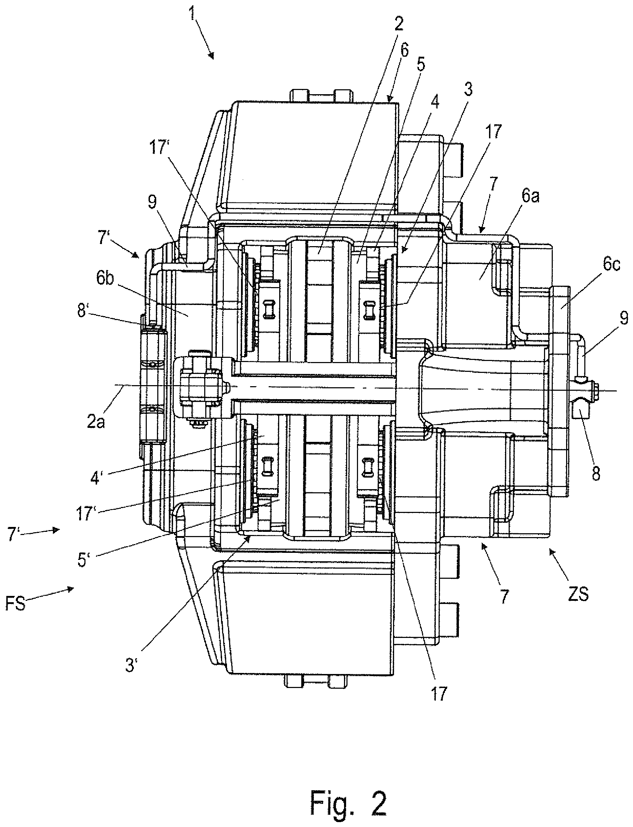

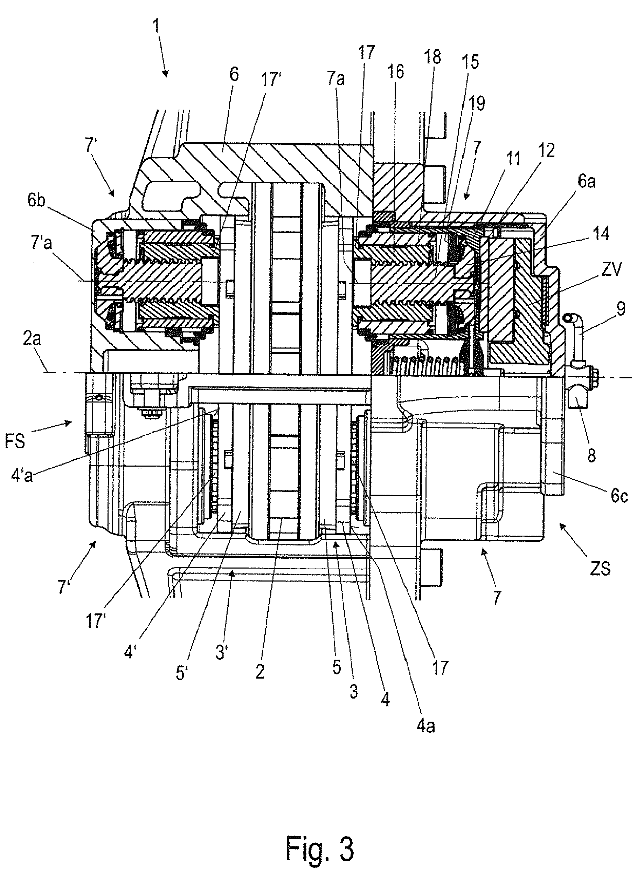

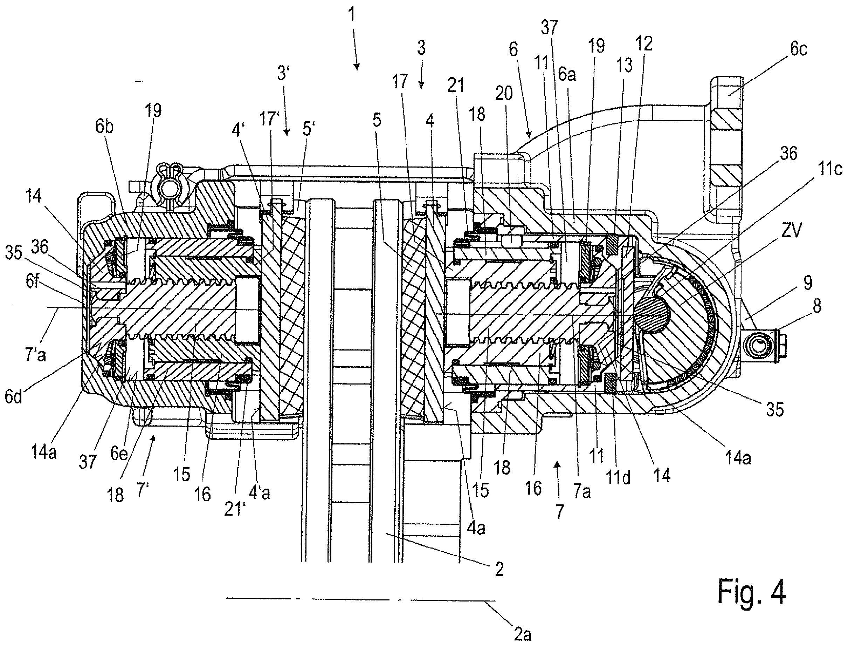

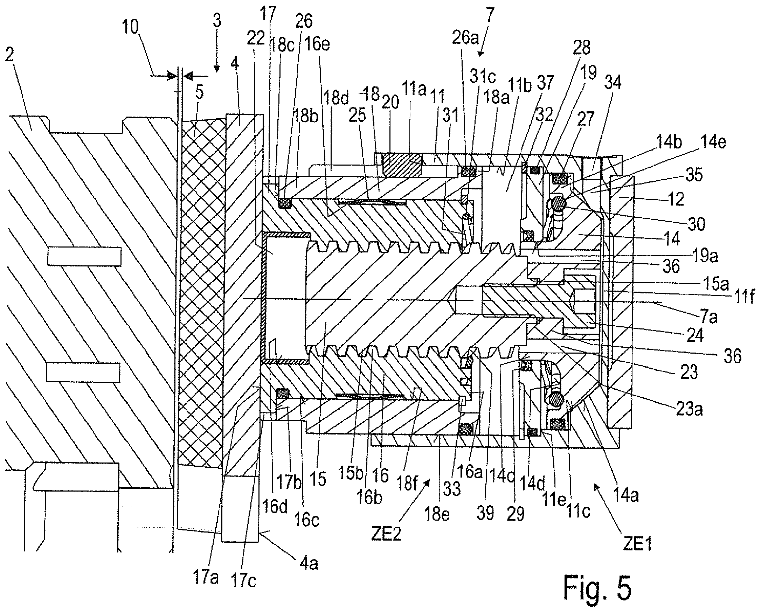

In **Fig. 1** ist eine schematische Perspektivansicht eines Ausführungsbeispiels einer erfindungsgemäßen Scheibenbremse 1 mit einer erfindungsgemäßen Nachstellvorrichtung dargestellt. **Fig. 2** zeigt eine schematische Draufsicht der Scheibenbremse 1 nach Fig. 1. **Fig. 3** und **Fig. 4** stellen schematische Teilschnittansichten der Scheibenbremse 1 nach Fig. 1 dar. **Fig. 5** zeigt eine schematische Schnittansicht einer Nachstelleinrichtung 7 der erfindungsgemäßen Nachstellvorrichtung nach Fig. 3-4.

Die Scheibenbremse 1 weist eine Bremsscheibe 2 mit einer Bremsscheibenachse 2a auf. Beiderseits der Bremsscheibe 2 ist jeweils ein Bremsbelag 3, 3' angeordnet. Jeder Bremsbelag 3, 3' besitzt eine Belagträgerplatte 4, 4', auf welcher jeweils ein Reibbelag 5, 5' aufgebracht ist. Die Bremsbeläge 3, 3' sind in nicht weiter beschriebener Weise in einem Bremssattel 6 in Richtung der Bremsscheibendrehachse 2a verschiebbar geführt aufgenommen.

Die Bremsscheibe 2 ist in dem gezeigten Ausführungsbeispiel von dem hier als Festsattel ausgeführten Bremssattel 6 übergriffen und auf einer hier nicht gezeigten Radachse verschiebbar ausgeführt. Der Bremssattel 6 weist einen Zuspannabschnitt 6a und einen Rückenabschnitt 6b auf und ist an einem nicht bezeichneten Bremsträger angebracht. Ein solcher Festsattel wird z.B. in der EP 1 546 571 B1 beschrieben, daher wird hier nicht näher darauf eingegangen.

Der neben dem Zuspannabschnitt 6a des Bremssattels 6 befindliche Bremsbelag 3 wird zuspannseitiger Bremsbelag 3 und der am Rückenabschnitt 6b des Bremssattels 6 angeordnete Bremsbelag 3' wird rückenseitiger oder reaktionsseitiger Bremsbelag 3' genannt.

Die Seite der Scheibenbremse 1 mit dem Zuspannabschnitt 6a wird als Zuspannseite ZS bezeichnet, wobei die Seite der Scheibenbremse 1 mit dem Rückenabschnitt 6b hier Felgenseite FS genannt wird.

**Fig. 3** zeigt eine Teilschnittansicht der Scheibenbremse 1 nach Fig. 2 in einer Draufsicht. Die Schnittebene verläuft hier parallel zu der Zeichenebene der Fig. 3 von der Felgenseite FS zur Zuspannseite ZS der Scheibenbremse 1 in Längsrichtung der Bremsscheibendrehachse 2a durch den Bremssattel 6 und einen Teil der in dem Bremssattel 6 angeordneten Nachstellvorrichtung.

Die Nachstellvorrichtung ist zum Ausgleich des Verschleißes der Bremsbeläge 3, 3' und der Bremsscheibe 2 vorgesehen und weist dazu in diesem Ausführungsbeispiel vier Nachstelleinrichtungen 7, 7' auf, von denen jeweils zwei einem Bremsbelag 3, 3' zugeordnet sind. So sind zwei zuspannseitige Nachstelleinrichtungen 7 dem zuspannseitigen Bremsbelag 3 zugeordnet und in dem Zuspannabschnitt 6a des Bremssattels 6 parallel zueinander angeordnet. Dies wird unten noch weiter erläutert. Jede der zuspannseitigen Nachstelleinrichtungen 7 weist eine Nachstellerachse 7a auf. In ähnlicher Weise sind zwei rückenseitige Nachstelleinrichtungen 7', von denen jede eine Nachstellerachse 7'a besitzt, in dem Rückenabschnitt 6b des Bremssattels 6 parallel zueinander angeordnet und dem rückenseitigen Bremsbelag 3' zugeordnet. Die zuspannseitigen Nachstelleinrichtungen 7 sind hier derart zu den rückenseitigen Nachstelleinrichtungen 7' diesen jeweils gegenüberliegend angeordnet, dass ihre jeweiligen Nachstellerachsen 7a und 7'a miteinander fluchten. Die Nachstellerachsen 7a, 7'a liegen alle in einer gemeinsamen Ebene und verlaufen zudem parallel zu der Bremsscheibendrehachse 2a.

In **Fig. 4** ist eine weitere Teilschnittansicht der Scheibenbremse 1 nach Fig. 1 von der Seite her gesehen dargestellt. Die Schnittebene verläuft hier senkrecht zu der Zeichenebene der Fig. 4 von der Felgenseite FS zur Zuspannseite ZS der Scheibenbremse 1 durch eine Ebene der Nachstellerachsen 7a, 7'a der in Fig. 3 nicht geschnittenen, d.h. in Fig. 3 unten angeordneten Nachstelleinrichtungen 7, 7'.

In dem Zuspannabschnitt 6a des Bremssattels 6 ist eine Zuspannvorrichtung ZV eingebaut, welche hier einen nicht näher beschriebenen Bremsdrehhebel aufweist. Ein Teil des Bremsdrehhebels ist in Fig. 3 in einem Längsschnitt und in Fig. 4 in einem Querschnitt als Zuspannvorrichtung ZV angedeutet. Der Bremsdrehhebel ist zum Zuspannen der Scheibenbremse 1 z.B. durch einen nicht gezeigten Pneumatikbremszylinder, der an einem Flansch 6c des Zuspannabschnitts 6a befestigt wird, betätigbar.

Der zuspannseitige Bremsbelag 3 steht mit einer Druckseite 4a seiner Belagträgerplatte 4 mit den zuspannseitigen Nachstelleinrichtungen 7 über jeweils einen Druckabschnitt 17 in Kontakt. Die Druckabschnitte 17 sind hier an Enden eines Kolbens 16 einer jeden zuspannseitigen Nachstelleinrichtung 7 angebracht. Der andere, rückenseitige Bremsbelag 3' steht in ähnlicher Weise mit einer Druckseite seiner Belagträgerplatte 4' mit den rückenseitigen Nachstelleinrichtungen 7' über jeweils einen Druckabschnitt 17' in Kontakt. Auch diese Druckabschnitte 17' sind hieran Enden eines Kolbens 16 einer jeden rückenseitigen Nachstelleinrichtung 7' angebracht. Die Druckabschnitte 17, 17' sind hier einstückig mit den Kolben 16 ausgebildet, können aber auch separate Druckstücke sein.

Die zuspannseitigen Nachstelleinrichtungen 7 stehen mit jeweils einer Druckplatte 12 an ihren zuspannseitigen Enden, welche den zur Bremsscheibe 2 zugewandten Enden gegenüberliegen, mit der Zuspannvorrichtung ZV in Kontakt. Zudem ist hier eine nicht bezeichnete Feder vorgesehen, welche die zuspannseitigen Nachstelleinrichtungen 7 mit der Zuspannvorrichtung ZV in die in Fig. 3 und Fig. 4 gezeigte gelöste Stellung der Scheibenbremse 1 bei nicht zugespannter Scheibenbremse 1 zurückstellt. Im Gegensatz dazu sind die rückenseitigen Nachstelleinrichtungen 7' in entsprechenden Aufnahmen des Rückenabschnitts 6b des Bremssattels 6 aufgenommen und stützen sich in dem Rückenabschnitt 6b ab. Dies wird unten noch näher beschrieben.

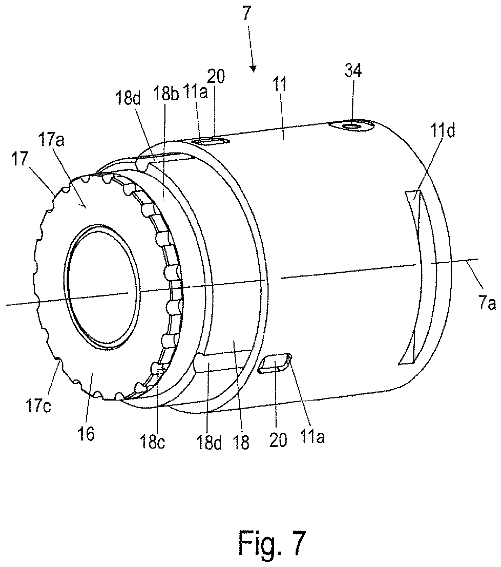

Die zuspannseitigen Nachstelleinrichtungen 7 sind in dem Zuspannabschnitt 6a des Bremssattels 6 mit einem Gehäuse 11 eingesetzt. Das Gehäuse 11 ist in dem Zuspannabschnitt 6a mit mindestens einem Verbindungselement 13, welches in Nuten 11d des Gehäuses 11 (siehe auch Fig. 7) eingreift, gegen Verdrehen gesichert. Das Gehäuse 11 wird im Folgenden noch ausführlich beschrieben.

Bei einem Zuspannen der Scheibenbremse 1 wird die zugehörige Zuspannkraft von der Zuspannvorrichtung ZV auf die Druckplatte 12 der zuspannseitigen Nachstelleinrichtungen 7 und auf deren Gehäuse 11 übertragen. Die Gehäuse 11 wirken ihrerseits, wenn die Nachstelleinrichtungen 7 nicht aktiviert sind bzw. in ihren so genannten Ruhestellungen stehen, jeweils über Innenkegel 11c auf einen Außenkegel 14a eines jeweiligen Spindelkopfes 14, der mit jeweils einer Spindel 15 fest verbunden ist. Die Zuspannkraft wird so über die Spindelköpfe 14 in die Spindeln 15 übertragen, welche jeweils über ein Außengewinde 15b mit einem Innengewinde 16b (siehe Fig. 5) des zugehörigen Kolbens 16 in Eingriff stehen. Auf diese Weise wird die Zuspannkraft weiter auf die Kolben 16 und deren Druckabschnitte 17 geleitet und durch diese auf den zuspannseitigen Bremsbelag 3 aufgebracht. Mit anderen Worten, die zuspannseitigen Nachstelleinrichtungen 7 befinden sich im Kraftverlauf der Zuspannkraft.

Anstelle des Außenkegels 14a des Spindelkopfes 14 ist es auch möglich, dass eine andere Außenkontur mit gleicher Wirkung vorgesehen ist. Dementsprechend weist das Gehäuse 11 dann anstelle des Innenkegels 11c eine mit der anderen Außenkontur des Spindelkopfes 14 korrespondierende Gegenkontur auf.

Die rückenseitigen Nachstelleinrichtungen 7' weisen hier kein Gehäuse auf. Das Gehäuse wird hier durch den Rückenabschnitt 6b des Bremssattels 6 gebildet. Dadurch ist es möglich, dass eine Baugröße des Bremssattels 6 reduziert werden kann. Die rückenseitigen Nachstelleinrichtungen 7' sind in passende Einformungen des Rückenabschnitts 6b des Bremssattels 6 eingesetzt. Diese Einformungen sind mit Innenkegeln 6d ausgestaltet. Dabei wird beim Zuspannen der Scheibenbremse 1 in dem hier gezeigten Fall einer verschiebbaren Bremsscheibe 2 diese gegen den rückenseitigen Bremsbelag 3' gepresst, wobei jeweils eine Reaktionskraft durch den Rückenabschnitt 6b des Bremssattels 6 über die eingeformten Innenkegel 6d auf die Außenkegel 14a eines jeweiligen Spindelkopfes 14 einer jeweiligen rückenseitigen Nachstelleinrichtung 7' bewirkt wird. Die Spindelköpfe 14 der rückenseitigen Nachstelleinrichtungen 7' sind wie die Spindelköpfe 14 der zuspannseitigen Nachstelleinrichtungen 7 jeweils mit einer Spindel 15 verbunden, die wiederum über den oben beschriebenen Gewindeeingriff mit dem jeweiligen Kolben 16 und dessen zugehörigen Druckabschnitt 17' in Verbindung steht. Auf diese Weise wird die Reaktionskraft beim Zuspannen durch die rückenseitigen Nachstelleinrichtungen 7' auf den rückenseitigen Bremsbelag 3' aufgebracht. Mit anderen Worten, die rückenseitigen Nachstelleinrichtungen 7' befinden sich im Kraftverlauf der auf die Zuspannkraft erzeugten Reaktionskraft.

Es ist aber auch denkbar, dass die rückenseitigen Nachstelleinrichtungen 7' wie die zuspannseitigen Nachstelleinrichtungen 7 mit einem Gehäuse 11 ausgerüstet sind. In diesem Fall sind die Einformungen des Rückenabschnitts 6b des Bremssattels 6 entsprechend der Außenform des Gehäuses 11 ausgebildet.

Der Aufbau der Nachstelleinrichtungen 7, 7' wird im Folgenden im Detail erläutert.

In **Fig. 5** ist eine schematische Schnittansicht einer zuspannseitigen Nachstelleinrichtung 7 der erfindungsgemäßen Nachstellvorrichtung nach Fig. 3-4 gezeigt.

Ein Abstand zwischen den Bremsbelägen 3, 3' und der Bremsscheibe 2 in der gelösten Stellung der Scheibenbremse 1 wird als Lüftspiel 10 bezeichnet. Das Lüftspiel 10 ist als ein so genanntes "Nominallüftspiel" konstruktiv auf ein bestimmtes Maß vorher festlegt.

Infolge von Belag- und Scheibenverschleiß wird dieses Lüftspiel 10 größer. Wenn dies nicht kompensiert wird, kann die Scheibenbremse 1 ihre Spitzenleistung nicht erreichen, da ein Betätigungshub der Zuspannvorrichtung ZV vergrößert ist.

Die erfindungsgemäße Nachstellvorrichtung mit den Nachstelleinrichtungen 7, 7' ist zur Nachstellung des vorher festgelegten Lüftspiels 10, also des Nominallüftspiels, ausgebildet.

Unter dem Begriff "Nachstellung" ist hier eine Wiedereinstellung des vorher festgelegten Lüftspiels 10 (Nominallüftspiel) zu verstehen, wenn das aktuelle Lüftspiel ein Maß aufweist, welches ungleich dem vorher festgelegten Lüftspiel 10 ist. Somit ist hier unter dem Begriff "Nachstellung" sowohl eine Lüftspielverkleinerung als auch eine Lüftspielvergrößerung des jeweiligen aktuellen Lüftspiels zu verstehen.

Das vorher festgelegte Lüftspiel 10 kann sich nicht nur aufgrund von Verschleiß von Bremsbelägen 3, 3' und Bremsscheibe 2 ändern, sondern auch aus anderen Gründen, wie z.B. durch Schwingungseinwirkungen.

Im Fall der Lüftspielverkleinerung wird das vorher festgelegte Lüftspiel 10 wieder eingestellt, indem ein zu großes vorhandenes Lüftspiel verkleinert wird. Und im Fall der Lüftspielvergrößerung wird das vorher festgelegte Lüftspiel 10 durch Vergrößerung eines zu kleinen vorhandenen Lüftspiels wieder auf das vorher festgelegte Lüftspiel 10 eingestellt.

Das vorher festgelegte Lüftspiel ist in der Nachstelleinrichtung 7, 7' konstruktiv festgelegt. In dem hier gezeigten Ausführungsbeispiel entspricht das vorher festgelegte Lüftspiel 10 dem Hub eines Druckkolbens zwischen zwei Anschlägen. Diese Anschläge können natürlich auch verstellbar oder/und einstellbar ausgeführt sein, um an verschiedene Nominallüftspiele anpassbar zu sein.

Mit anderen Worten, die Nachstellvorrichtung verkleinert ein vorhandenes Lüftspiel, wenn dieses in Bezug auf das in den Nachstelleinrichtungen 7, 7' vorher festgelegte bzw. gespeicherte Lüftspiel 10 zu groß ist, und sie vergrößert ein vorhandenes Lüftspiel, wenn dieses in Bezug auf das in den Nachstelleinrichtungen 7, 7' vorher festgelegte bzw. gespeicherte Lüftspiel 10 zu klein ist.

Diese Vorgänge werden unten noch im Detail erläutert.

Ein zu kleines Lüftspiel kann dazu führen, dass die Bremsbeläge 3, 3' zum Teil oder ganz mit der Bremsscheibe 2 in leichten Kontakt geraten, wodurch ein so genanntes Schleifmoment hervorgerufen wird. Dies kann erhöhten Verschleiß von Bremsscheibe 2 und Bremsbelägen 3, 3' und somit eine zusätzliche Belastung der Umwelt insbesondere durch Feinstaub, wie auch einen erhöhten Kraftstoffverbrauch des Fahrzeugs mit dieser Bremse verursachen, da das Schleifmoment auch eine bestimmte Bremswirkung erzeugt.

Die Nachstelleinrichtungen 7, 7' der Nachstellvorrichtung sind dergestalt ausgebildet, dass eine Aufteilung der Nachstellfunktion in zwei unterschiedliche Ablaufschritte vorgesehen ist. Dabei ist Ablaufschritt 1 die Einstellung des Lüftspiels 10 und der Ablaufschritt 2 die Nachstellung. Dies wird unten weiter ausführlich beschrieben.

Die Aktivierung der Nachstellmechanik der Nachstelleinrichtungen 7, 7' erfolgt mit Hilfe eines Druckmediums, vorzugsweise Druckluft, mit dem zwei Zylindereinheiten ZE1, ZE2 über einen Anschluss 8 und Druckleitung 9 beaufschlagt werden. Die Druckleitung 9 verbindet den gemeinsamen Anschluss 8 mit einem Anschluss 8' der/den rückenseitigen Nachstelleinrichtungen 7' (siehe Fig. 1, 2) an dem Rückenabschnitt 6b des Bremssattels 6.

Die Nachstelleinrichtung 7 umfasst ein ortsfestes Gehäuse 11, einen Spindelkopf 14, eine Spindel 15, einen Kolben 16, einen Nachstellkolben 18 und eine Dichtscheibe 19.

Das Gehäuse 11 ist als ein Hohlzylinder mit kreisförmigem Querschnitt ausgebildet und im Bremssattel 6, hier im Zuspannabschnitt 6a, ortsfest und verdrehfest eingesetzt. Eine Innenbohrung 11b des Gehäuses 11 ist zur Bremsscheibe 2 hin weisend offen, verläuft in Längsrichtung des Gehäuses 11 in Richtung der Nachstellerachse 7a zur Zuspannseite ZS (in Fig. 5 nach rechts) bis zu einem Absatz 11e und dann mit einem kleineren Innendurchmesser weiter bis zu einem weiteren Absatz eines Innenkegels , der mit einer Bodenwand 11f verschlossen ist. Die Bodenwand ist 11f außenseitig mit der Druckplatte 12 verbunden und verläuft parallel zu der Bremsscheibe 2.

Der Innenbohrung 11b ist durch die in ihn eingesetzte Dichtscheibe 19, welche an dem Absatz 11e anliegt, in die zwei Zylindereinheiten ZE1 und ZE2 aufgeteilt.

Die erste Zylindereinheit ZE1 und die zweite Zylindereinheit ZE2 sind in dem Gehäuse 11 in Reihe angeordnet. Die erste Zylindereinheit ZE1 ist zwischen der Dichtscheibe 19 und der Bodenwand 11f des Gehäuses 11 angeordnet, wohingegen die zweite Zylindereinheit ZE2 zwischen der Dichtscheibe 19 und der zur Bremsscheibe 2 hin weisenden Öffnung der Innenbohrung 11b angeordnet ist.

Die erste Zylindereinheit ZE1 weist den Spindelkopf 14 als ersten Druckkolben auf, wobei der Spindelkopf 14 fest mit der Spindel 15 verbunden ist. Die Spindel 15 kann als Kolbenstange angesehen werden. Sie erstreckt sich durch die zweite Zylindereinheit ZE2, welche den zweiten Druckkolben, nämlich den Kolben 16 und den Nachstellkolben 18 aufweist, wie unten noch weiter erläutert wird.

Im Weiteren werden der Kolben 16, der Nachstellkolben 18 mit einem Dichtelement 26a und die Spindel 15 als Nachstelleinheit bezeichnet.

Die Dichtscheibe 19 ist mit einem Sicherungsring 32 in der Innenbohrung 11b axial gegen den Absatz 11e festgelegt. Auf diese Weise teilt die Dichtscheibe 19 die Innenbohrung 11b in einen im Wesentlichen geschlossenen Raum zwischen der Dichtscheibe 19 und der Bodenwand 11f und in einen offenen Raum zwischen der Dichtscheibe 19 und der zur Bremsscheibe 2 weisenden Öffnung der Innenbohrung 11b.

An ihrem umlaufenden Rand ist die Dichtscheibe 19 mit einem Dichtelement 28, z.B. ein O-Ring, gegenüber der umlaufenden Wand der Innenbohrung 11b abgedichtet. Zentral ist die Dichtscheibe 19 mit einer Durchgangsbohrung 19a für einen Führungsabschnitt 14c des Spindelkopfes 14 versehen.

Die erste Zylindereinheit ZE1 weist den geschlossenen Raum zwischen der Dichtscheibe 19, der Bodenwand 11f und der umlaufenden Wand des Gehäuses 11 und den Spindelkopf 14 auf. Der Spindelkopf 14 ist in diesem Raum in Richtung der Nachstellerachse 7a längsverschiebbar und um die Nachstellerachse 7a verdrehbar angeordnet.

Der Spindelkopf 14 weist einen zuspannseitigen Außenkegel 14a, einen umlaufenden Randabschnitt 14b mit einem Dichtelement 27, einen Führungsabschnitt 14c, und einen Lagerabschnitt 14d auf.

Der Außenkegel 14a des Spindelkopfes 14 ist als Kegelstumpf ausgebildet und kommuniziert mit seiner Außenkegelfläche mit einer Innenkegelfläche des Innenkegels 11c. Der Randabschnitt 14b kontaktiert die umlaufende Innenwand des Gehäuses 11 in dem Bereich zwischen der Dichtscheibe 19 und dem Innenkegel 11c. Ein Bereich zwischen dem Außenkegel 14a und dem Innenkegel 11c ist mittels des Dichtelementes 27 am Außenumfang des Spindelkopfes 14 gegenüber der Innenwand des Gehäuses 11 abgedichtet. Dieser Bereich bildet einen Druckraum 35 der ersten Zylindereinheit ZE1.

Eine Anschlussbohrung 34 ist von der Außenseite der Zylinderwandung des Gehäuses 11 durch den Innenkegel 11c verlaufend eingeformt und kommuniziert mit dem Druckraum 35 der ersten Zylindereinheit ZE1.

Die zu der Dichtscheibe 19 weisende Seite des Spindelkopfes 14 ist mit einer umlaufenden Ausnehmung versehen, die den Lagerabschnitt 14d bildet. An dem äußeren Umfang des Lagerabschnitts 14d ist eine umlaufende Nut als Lageraufnahme 14e eingeformt, in welcher ein axiales Wälzlager 30 reibungsarm aufgenommen ist. Das axiale Wälzlager 30 wird durch eine Rückstellfeder 30a an der Dichtscheibe 19 an deren zuspannseitiger Seite abgestützt. Die Rückstellfeder 30a drückt auf diese Weise das axiale Wälzlager 30 an den Spindelkopf 14. Außerdem übt die Rückstellfeder 30a eine axiale Kraft in Richtung der Nachstellerachse 7a, 7'a auf den Spindelkopf 14 derart aus, dass der Spindelkopf 14 von der Rückstellfeder in die Ruhestellung gedrückt ist, in welcher sein Außenkegel 14a an dem Innenkegel 11c fest anliegt.

Der kegelförmige Spindelkopf 14 stützt sich somit in der Ruhestellung an der entsprechenden, drehfesten Gegenkontur, welche durch den Innenkegel 14a gebildet ist, an dem Gehäuse 11 ab.

Der Führungsabschnitt 14c des Spindelkopfes 14 steht in Richtung zur Bremsscheibe 2 hervor und erstreckt sich durch die Durchgangsbohrung 19a der Dichtscheibe 19. Damit ist eine Lagerung und axiale Führung für den Spindelkopf 14 an der Dichtscheibe 19 gebildet. Ein Dichtelement 29 dichtet den Führungsabschnitt 14c an seinem Außendurchmesser gegenüber der Durchgangsbohrung 19b der Dichtscheibe 19 ab. Der Außendurchmesser des Führungsabschnitts 14c entspricht hier etwa einem halben Außendurchmesser des Randabschnitts 14b des Spindelkopfes 14.

Mittels der Lagerung des Wälzlagers 30 und des Führungsabschnitts 14c in der Durchgangsbohrung 19a der Dichtscheibe 19 ist der Spindelkopf 14 (und natürlich auch die mit ihm fest verbundene Spindel 15) auch um die Nachstellerachse 7a, 7'a verdrehbar. In der Ruhestellung ist der Spindelkopf 14 jedoch aufgrund des Kontakts zwischen seinem Außenkegel 14a und dem Innenkegel 11c und der axial wirkenden Kraft der Rückstellfeder 30a durch das damit wirkende Reibmoment drehfest.

Die erste Zylindereinheit ZE1 umfasst somit den ersten Druckkolben als Spindelkopf 14 mit Außenkegel 14a, den von dem Gehäuse 11 umgebenen Raum zwischen der Dichtscheibe 19 und dem Innenkegel 11c des Gehäuses 11, das Wälzlager 30 und die Rückstellfeder 30a. Ein Hubraum des Spindelkopfes 14 ist ein Bestandteil des von dem Gehäuse 11 umgebenen Raums zwischen der Dichtscheibe 19 und dem Innenkegel 11c des Gehäuses 11.

Der Hub des Spindelkopfes 14 ist von der Dichtscheibe 19 und dem Innenkegel 11c begrenzt und entspricht auf diese Weise dem vorher konstruktiv festgelegten Lüftspiel 10, nämlich dem Nominallüftspiel.

Der Spindelkopf 14, welcher den ersten Druckkolben bildet, dient zur Lüftspieleinstellung. Darunter ist zu verstehen, dass das Nominallüftspiel durch den Hub des Spindelkopfes 14 bestimmt ist und eine Referenzgröße bildet, mit der es ermöglicht wird, das vorher festgelegte Lüftspiel 10 nach jeder Veränderung reproduzierbar wieder korrekt einzustellen. Dies wird unten noch weiter im Detail erläutert.

Die zweite Zylindereinheit ZE2 übernimmt die Nachstellfunktion, also das Anpressen der Nachstelleinheit (Spindel 15, Kolben 16 und Nachstellkolben 18) an den jeweiligen Bremsbelag 3, 3' und somit an die Bremsscheibe 2.

Ein zentraler Abschnitt des Spindelkopfes 14 weist einen Befestigungsabschnitt 23 und zumindest einen Axialkanal als Überstromkanal 36 auf. Der zumindest eine Überstromkanal 36 verbindet den Druckraum 35 der ersten Zylindereinheit ZE1 mit einem Druckraum 37 der zweiten Zylindereinheit ZE2.

Der Spindelkopf 14 ist über den Befestigungsabschnitt 23 mittels eines Befestigungselementes 24, z.B. Schraube, mit der Spindel 15 fest, hier aber lösbar, verbunden. Für eine verdrehsichere Verbindung weist das zuspannseitige Ende der Spindel 15 einen profilierten Vorsprung 15a auf, welcher mit einem korrespondierenden Führungsabschnitt 23a des Befestigungsabschnitts 23 in Eingriff steht.

Die Spindel 15 ist hier als eine Gewindespindel mit einem Außengewinde 15b ausgebildet und erstreckt sich von der Dichtscheibe 19 in Richtung auf die Bremsscheibe 2 durch die Innenbohrung 11b des Gehäuses 11 und steht daraus hervor. Die Spindel 15 ist zusammen mit dem mit ihr fest verbundenen Spindelkopf 14 in Richtung der Nachstellerachse 7a axial verschiebbar und um die Nachstellerachse 7a verdrehbar angeordnet. Die Verschiebbarkeit der Spindel 15 ist durch den Hub des Spindelkopfes 14 in der ersten Zylindereinheit ZE1 begrenzt. Die Verdrehbarkeit von Spindel 15 und Spindelkopf 14 ist in der Ruhestellung der Nachstelleinrichtung 7, 7' wie oben schon angegeben aufgrund des hohen Reibmomentes zwischen Außenkegel 14a und Innenkegel 11c blockiert.

Die zweite Zylindereinheit ZE2 umfasst den offenen Raum, den Kolben 16 und den Nachstellkolben 18, welche zusammen einen gemeinsamen Druckkolben der zweiten Zylindereinheit ZE2, nämlich den zweiten Druckkolben, bilden. Der Kolben 16 und der Nachstellkolben 18 sind in dem offenen Raum in der Innenbohrung 11b verschiebbar und um die Nachstellerachse 7a verdrehbar angeordnet.

Der Kolben 16 ist in einer Durchgangsbohrung 18f des Nachstellkolbens 18 koaxial zu diesem und zu der Nachstellerachse 7a angeordnet, wobei der Nachstellkolben 18 auf dem Kolben 16 axial festgelegt ist, und der Kolben 16 gegenüber dem Nachstellkolben 18 um die Nachstellerachse 7a verdrehbar ist. Auf diese Weise sind der Kolben 16 und der Nachstellkolben 18 so verbunden, dass sie gemeinsam axial in Richtung der Nachstellerachse 7a verschiebbar sind.

Zwischen den Endabschnitten des Kolbens 16 und des Nachstellkolbens 18, der sie umschließenden Wand des Gehäuses 11 und der zur Bremsscheibe 2 weisenden Seite der Dichtscheibe 19 ist der Druckraum 37 der zweiten Zylindereinheit ZE2 festgelegt.

Der Kolben 16 ist als ein Gewindekolben mit einem Innengewinde 16b ausgebildet. Das Innengewinde 16b kommuniziert mit dem Außengewinde 15b der Spindel 15. Der Kolben 16 ist auf die Spindel 15 aufgeschraubt, wobei sein Innengewinde 16b mit dem Außengewinde 15b der Spindel 15 in Eingriff steht. Innengewinde 16b und Außengewinde 15b sind als selbsthemmungsfreie Gewinde ausgeführt.

Das Innengewinde 16b des Kolbens 16 erstreckt sich von einem zuspannseitigen Endabschnitt 16a des Kolbens 16 in Richtung auf die Bremsscheibe 2 über etwa vier Fünftel der Länge des Kolbens 16 in Richtung der Nachstellachse 7a und mündet in eine axiale Bohrung 16d in einem zur Bremsscheibe 2 weisenden Endbereich des Kolbens. Mit einer Dichtkappe 22 ist die Bohrung 16d und somit die Nachstelleinheit mit Spindel 15, Kolben 16 und Nachstellkolben 18 druckdicht verschlossen. Eine Dichtwirkung kann durch eine Presspassung der Dichtkappe 22 in der Bohrung 16d (wie bildlich dargestellt) oder aber auch mit Hilfe eines Dichtrings erreicht werden. Die axiale Sicherung der Dichtkappe 22 kann durch einen Sicherungsring erzielt werden. Eine alternative Lösung hierzu wäre eine eingeschraubte Dichtkappe 22. Grundsätzlich sind aber auch andere, aus der Technik bekannte Dichtungs- und Sicherungsmethoden möglich (z.B. schweißen, kleben etc.).

Der zur Bremsscheibe 2 weisende Endbereich des Kolbens 16 ist mit dem Druckabschnitt 17 versehen, der mit einer zur Bremsscheibe 2 weisenden Druckfläche 17a mit der Druckseite 4a des zuspannseitigen Bremsbelags 3 in Kontakt steht. Der Druckabschnitt 17 ist mit einem umlaufenden Kragen 17b versehen, welcher von einer Außenfläche 16c des Kolbens 16 radial hervorsteht und einen Anschlag für den Nachstellkolben 18 bildet, der auf den Kolben 16 aufgeschoben ist.

Zur Abdichtung von Kolben 16 und Nachstellkolben 18, von denen die Außenfläche 16c des Kolbens 16 und eine Innenfläche der Durchgangsbohrung 18f des Nachstellkolbens 18 in Kontakt stehen, dient ein Dichtelement 26, welches neben dem umlaufenden Kragen 17b des Druckabschnitts 17 in einer umlaufenden Nut in die Außenfläche 16c des Kolbens 16 eingesetzt ist.

Der Nachstellkolben 18 wird vor dem Aufschrauben des Kolbens 16 auf den Kolben 16 aufgeschoben. Dabei liegt ein Endabschnitt 18b des Nachstellkolbens 18 mit einer Stirnfläche 18c an dem umlaufenden Kragen 17b des Druckabschnitts 17 des Kolbens 16 an. Ein diesem Endabschnitt 18b gegenüberliegender, zuspannseitiger Endabschnitt 18a ist mit einem Sicherungsring 33, der am Endabschnitt 16a des Kolbens 16 vorgesehen ist, axial auf dem Kolben 16 festgelegt. Damit ist es ermöglicht, dass der Nachstellkolben 18 zusammen mit dem Kolben 16 gemeinsam längs der Nachstellerachse 7a, 7'a axial beweglich sind.

Beim Aufschrauben des Kolbens 16 mit dem auf ihm wie oben beschrieben aufgeschobenen Nachstellkolben 18 auf die Spindel 15 wird der Nachstellkolben 18 in die Innenbohrung 11b des Gehäuses 11 eingeführt. Dabei kommen eine Außenfläche 18e des Nachstellkolbens 18 und die Innenbohrung 11b des Gehäuses 11 in Kontakt. Eine Abdichtung des Nachstellkolbens 18 gegenüber der Innenbohrung 11b des Gehäuses erfolgt durch ein Dichtelement 26a, welches in einer umlaufenden Nut eines umlaufenden Außenrand des zuspannseitigen Endabschnitts 18a eingesetzt ist.

Aus funktionellen Gründen ist erforderlich, dass der Kolben 16 drehfest gelagert ist. Um dies zu gewährleisten, ist zum Einen der Nachstellkolben 18 durch mindestens ein oder mehrere als Gleitsteine ausgebildete Führungselemente 20 gegen Verdrehen gegenüber dem im Bremssattel 6 ortsfesten Gehäuse 11 und somit gegenüber dem Zuspannabschnitt 6a des Bremssattels 6 gesichert. Zum Anderen ist der Kolben 16 mit Hilfe mindestens einer zwischen Nachstellkolben 18 und Kolben 16 eingebauten Reibfeder 25 mit dem Nachstellkolben 18 mittels der durch die Reibfeder 25 erzeugten Reibkraft fixiert. Die mindestens eine Reibfeder 25 ist in einer entsprechenden Aufnahme 16e in der Außenfläche 16c des Kolbens 16 eingesetzt. Die Reibfeder 25 stützt sich somit in der Aufnahme 16e an dem Kolben 16 ab und drückt mit einer vorbestimmten Kraft mit ihrer Außenseite gegen die Innenfläche der Durchgangsbohrung 18f des Nachstellkolbens 18. Damit wird ein durch eine Auswahl der Reibfeder 16 beeinflussbares Reibmoment zwischen Kolben 16 und Nachstellkolben 18 erzeugt. Mehrere Reibfedern 25 mit zugehörigen Aufnahmen 16e können so am Umfang des Kolbens 16 angeordnet sein.

Das mindestens eine Führungselement 20 ist in einer entsprechenden Aufnahme 11a in der umlaufenden Wand des Gehäuses 11 festgelegt und in einer Längsnut 18d in dem Nachstellkolben 18 in Längsrichtung parallel zu der Nachstellachse 7a geführt und tangential festgelegt, so dass eine drehfeste Verbindung des Nachstellkolbens 18 zum Gehäuse 11 gebildet ist.

Der Kolben 16 und der Nachstellkolben 18 bilden zusammen den zweiten Druckkolben als Druckkolben der zweiten Zylindereinheit ZE2, wobei der Spindelkopf 14 den Druckkolben der ersten Zylindereinheit ZE1 bildet. Der erste und der zweite Druckkolben bilden mit einer entsprechenden Gegenkontur die jeweilige Zylindereinheit, welche durch die Dichtscheibe 19, die sich zwischen der ersten Zylindereinheit ZE1 und der zweiten Zylindereinheit ZE2 befindet, drucktechnisch voneinander getrennt sind. Zur Abdichtung ist die Dichtscheibe 19 mit einem inneren Dichtring (Dichtelement 29 zum Führungsabschnitt 14c des Spindelkopfes 14) und einem äußeren Dichtring (Dichtelement 32 zur Innenbohrung 11b des Gehäuses 11) versehen.

Die Innenbohrung 11b des Gehäuses 11, der Spindelkopf 14, die Spindel 15, der Kolben 16, der Nachstellkolben 18 und die Dichtscheibe 19 sind koaxial zu der gemeinsamen Nachstellachse 7a angeordnet.

Damit das zur sicheren Funktion des Gewindetriebs zwischen dem Außengewinde 15b der Spindel 15 und dem Innengewinde 16b des Kolbens 16 erforderliche Gewindespiel keinen Einfluss auf das Lüftspiel 10 hat, ist die Spindel 15 mit dem Kolben 16 durch eine Vorspannfeder 31 axial vorgespannt. Ein Flankenwechsel in der Gewindekopplung und damit ein Einfluss des Gewindespiels auf das Lüftspiel 10 kann somit vermieden werden.

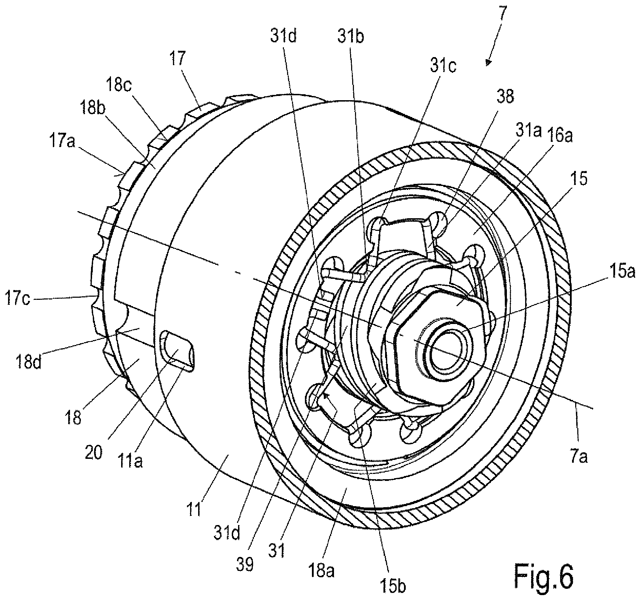

Die Vorspannfeder 31 ist in Fig. 6 in einer schematischen Perspektivdarstellung der Nachstelleinrichtung 7 nach Fig. 5 in einer Teilschnittansicht gezeigt. Fig. 7 stellt eine weitere schematische Perspektivansicht der Nachstelleinrichtung 7 dar.

Die Vorspannfeder 31 umfasst gerade Verbindungsabschnitte 31a, bogenförmige Abschnitte 31b mit kleinem Radius, bogenförmige Abschnitte 31c mit großem Radius und Endabschnitte 31d.

Jeweils zwei Verbindungsabschnitte 31a sind an ihren hier radial innen liegenden Enden mit einem jeweiligen bogenförmigen Abschnitt 31b mit kleinem Radius V-förmig angeordnet. Die so gebildeten V-förmigen Abschnitte sind jeweils mit ihrer Spitze, d.h. mit ihren bogenförmigen Abschnitten 31b zur Nachstellerachse 7a weisend, sternförmig um die Spindel 15 angeordnet. Dabei sind die oberen Enden von sich am Umfang gegenüber stehenden Verbindungsabschnitten 31a von zwei benachbarten V-förmigen Teilen jeweils durch einen bogenförmigen Abschnitt 31c mit großem Radius trapezähnlich verbunden.

Die Vorspannfeder 31 ist mit ihren bogenförmigen Abschnitten 31c mit großem Radius in hinterschnittenen Ausnehmungen 38 in der Stirnseite des zuspannseitigen Endabschnitts 16a des Kolbens 16 aufgenommen (siehe auch Fig. 5), wobei die Spitzen der V-förmigen ihrer bogenförmigen Abschnitten 31b zwischen Gewindeflanken 39 des Außengewindes 15b der Spindel 15 eingreifen. Die Vorspannfeder 31 ist auf diese Weise zwischen dem Kolben 16 und der Spindel 15 axial vorgespannt, dass sie die Flanken des Außengewindes 15b der Spindel 15 gegen die Flanken des Innengewindes 16b des Kolbens 16 in Richtung der Nachstellerachse 7a drückt und somit eine spielfreie Gewindekopplung des Außengewindes 15b der Spindel 15 und des Innengewindes 16b des Kolbens 16 bewirkt.

In den Figuren 6 und 7 ist der Druckabschnitt 17 mit seinem umlaufenden Kragen 17b, der auch als Kopf bezeichnet wird, dargestellt. Der Rand dieses Kopfes weist eine Profilierung 17c auf. Die Profilierung 17c dient als ein Kraftangriff für ein geeignetes Werkzeug, um den Kolben 16, der mit dem Druckabschnitt 17 verbunden ist, bei Wechsel der Bremsbeläge 3, 3' manuell zurückzudrehen.

Zudem ist in Fig. 7 eine Nut 11d im zuspannseitigen Endbereich des Gehäuses 11 gezeigt, welche tangential zu dem Gehäuse 11 verläuft und zur Aufnahme des Verbindungselementes 13 (siehe Fig. 4) vorgesehen ist.

Die obenstehende Beschreibung der zuspannseitigen Nachstelleinrichtung 7 gilt auch für die rückenseitige/ Nachstelleinrichtung/en 7', wobei sich die rückenseitige/n Nachstelleinrichtung/en 7' von der zuspannseitigen Nachstelleinrichtungen 7 dadurch unterscheidet/unterscheiden, dass sie kein Gehäuse 11 aufweist/aufweisen. Die oben bereits genannten Einformungen in dem Rückenabschnitt 6b des Bremssattels 6 weisen jeweils eine Innenbohrung 6e auf, die der jeweiligen Innenbohrung 11b der Gehäuse 11 der zuspannseitigen Nachstelleinrichtung 7 entspricht. Weiterhin sind die Einformungen jeweils mit einem Innenkegel 6d und einer Bodenwand 6f ausgebildet, welche jeweils den Innenkegeln 11c und den Bodenwänden 11f des Gehäuses 11 der zuspannseitigen Nachstelleinrichtungen 7 entsprechen.

Der Druckraum 35 der ersten Zylindereinheit ZE1 der rückenseitigen Nachstelleinrichtung(en) 7' befindet sich daher zwischen der Bodenwand 6f, dem Innenkegel 6d und dem Außenkegel 14a des jeweiligen Spindelkopfes 14 der rückenseitigen Nachstelleinrichtung(en) 7'. Der Druckraum 37 der zweiten Zylindereinheit ZE2 der rückenseitigen Nachstelleinrichtung(en) 7' befindet sich auch hier zwischen der Dichtplatte 19 und den Endabschnitten des Kolbens 16 und des Nachstellkolbens 18, wobei die sie umschließenden Wand durch die Innenbohrung 6e des Rückenabschnitts 6b des Bremssattels 6 gebildet ist.

Der Anschluss 8' mit der Druckleitung 9 (siehe Fig. 1, 2) ist am Rückenabschnitt 6b des Bremssattels 6 angebracht und mit dem Druckraum 35 der ersten Zylindereinheit ZE1 der rückenseitigen Nachstelleinrichtung(en) 7' verbunden. Dies ist nicht gezeigt, aber leicht vorstellbar.

Im eingebauten Zustand der Nachstelleinrichtungen 7, 7' in dem Bremssattel 6 (siehe Fig. 4) sind die Nachstellkolben 18 an ihren Enden, welche zur Bremsscheibe 2 weisen, jeweils mit einem Dichtelement 21, 21', z.B. ein Faltenbalg gegenüber dem Bremssattel 6 abgedichtet (Dichtelement 21 am Zuspannabschnitt 6a; Dichtelement 21' am Rückenabschnitt 6b).

Die Nachstellvorrichtung mit ihren Nachstelleinrichtungen 7, 7' ist dazu ausgelegt, nicht nur ein zu großes Lüftspiel 10b durch Verkleinerung wieder auf das normale, vorher festgelegte Lüftspiel 10 (Nominalspiel) einzustellen, sondern auch ein zu kleines Lüftspiel 10d durch Vergrößerung wieder auf das normale, vorher festgelegte Lüftspiel 10 (Nominalspiel) einzustellen. Zudem kann auch ein normales Lüftspiel 10 beibehalten werden. Und es ist eine manuelle Rückstellung der Nachstelleinrichtung 7, 7' möglich. Diese unterschiedlichen Fälle werden im Nachfolgenden detailliert erläutert.

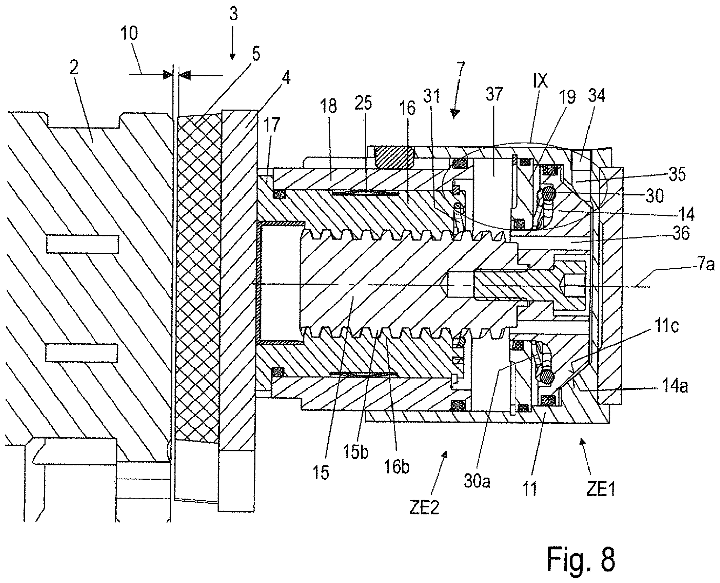

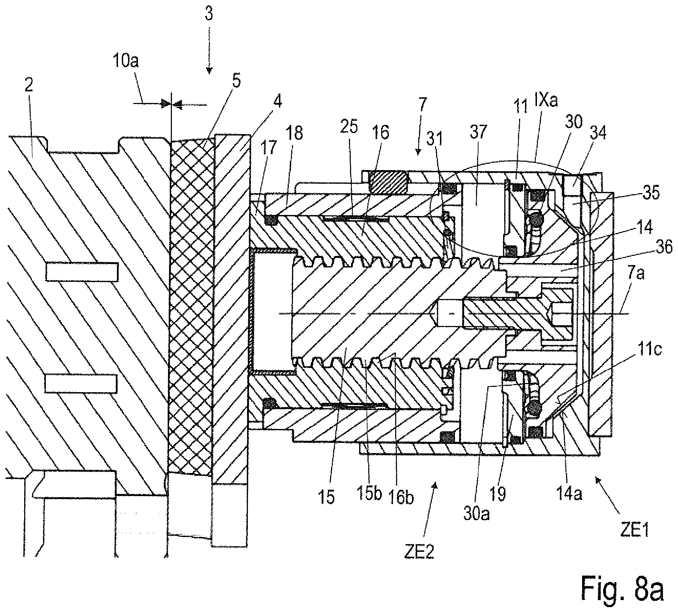

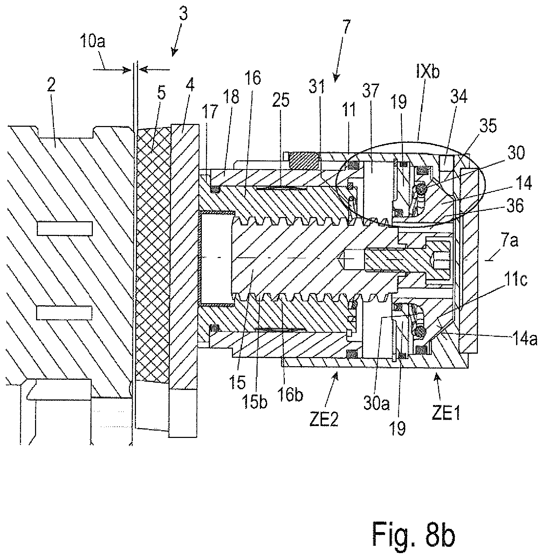

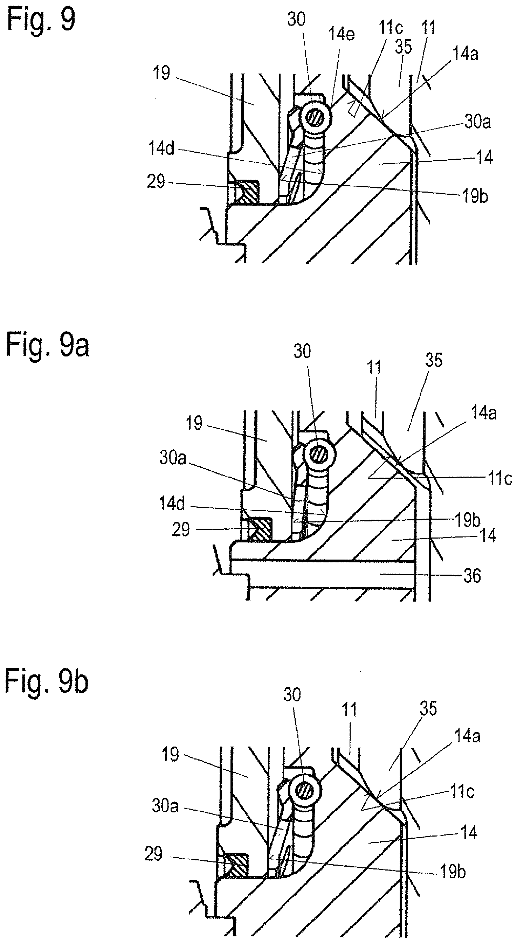

In **Fig. 8****,** **8a-8b** sind schematische Schnittansichten der Nachstelleinrichtung 7 nach Fig. 5 in verschiedenen Betriebszuständen gezeigt. **Fig. 9, 9a-9b** zeigen dazu schematische vergrößerte Schnittansichten von Bereichen IX, IXa, IXb der Nachstelleinrichtung 7 nach Fig. 8, 8a-8b in verschiedenen Betriebszuständen. Fig. 8, 8a-8b und 9, 9a-9b bilden zusammen eine Bildfolge der Funktionsweise der Nachstelleinrichtung 7 bei einem normalen Lüftspiel 10. Die Funktionsweise wird im Folgenden anhand der zuspannseitigen Nachstelleinrichtung(en) 7 beschrieben und gilt ebenso für die rückenseitige Nachstelleinrichtung(en) 7'.

Das Lüftspiel 10 in Fig. 8 entspricht dem Vorgabewert und wird hier normales Lüftspiel 10 genannt. Fig. 8 und Fig. 9 (vergrößert) zeigen die Ruhestellung der Nachstelleinrichtung 7, wobei der Spindelkopf 14 mit seinem Außenkegel 14a durch die Rückstellfeder 30a an den Innenkegel 11c des Gehäuses 11 gepresst wird.

Im Falle der Aktivierung der Nachstelleinrichtung 7 strömt zunächst das Druckmedium durch die Anschlussbohrung 34 in den Druckraum 35 der ersten Zylindereinheit ZE1 und schiebt dadurch den Spindelkopf 14 der Spindel 15 von der Ruhestellung in die Arbeitsendstellung, welche in Fig. 8a und Fig. 9a dargestellt ist.

Dabei bewegt sich der Spindelkopf 14 zusammen mit der mit ihm verbundenen Spindel 15 in Richtung der Nachstellerachse 7a auf die Bremsscheibe 2 zu. Der dabei zurückgelegte Weg entspricht dem vorgegebenen Lüftspiel 10 (z.B. 0,5mm für beidseitige Nachstellung oder 1,0mm für einseitige Nachstellung). In der Arbeitsendstellung ist der Spindelkopf 14 mittels des Druckmediums in dem Druckraum 35 gegen die Dichtscheibe 19 verstellt und drückt die Rückstellfeder 30a gegen die Dichtscheibe 19.

Auf diese Weise kann der erste Druckkolben, nämlich der Spindelkopf 14, der ersten Zylindereinheit ZE1 eine axiale Hubbewegung aus der Ruhestellung in die Arbeitsendstellung und zurück ausführen. Die Ruhestellung ist durch den Innenkegel 11c des Gehäuses 11 begrenzt, wobei die Arbeitsendstellung durch die Dichtscheibe 19 festgelegt ist. Zwischenstellungen sind möglich, wie weiter unten noch beschrieben wird.

Durch einen oder mehrere Überströmkanäle 36 im Spindelkopf 14 gelangt das Druckmedium in den Druckraum 37 der zweiten Zylindereinheit ZE2. Bei korrekt eingestelltem Lüftspiel 10 findet keine Bewegung im Nachstellkolben 18 statt, da die Nachstellmechanik, d.h. der Kolben 16 und der Nachstellkolben 18, bereits über den Hub des Spindelkopfes 14 (und der Spindel 15) in der ersten Zylindereinheit ZE1 zusammen mit dem Bremsbelag 3 an die Bremsscheibe 2 angelegt wurde, wobei das Lüftspiel 10a den Wert Null erreicht.

Beim Entlüften der Nachstelleinrichtung 7 strömt das Druckmedium aus den Zylindereinheiten ZE1 und ZE2 wieder heraus. Der Spindelkopf 14 und somit die Spindel 15 werden durch die Rückstellfeder 30a unterhalb des Spindelkopfes 14 der Gewindespindel 15 in die Ruhestellung gedrückt. Dies zeigen Fig. 8b und 9b.

Dabei ergibt sich durch den Kegelsitz zwischen dem Außenkegel 14a des Spindelkopfes 14 und dem Gegenprofil des Innenkegels 11c des Gehäuses 11 ein Reibmoment, welches ein Zurückdrehen der mit dem Gewindekopf 14 verbundenen Spindel 15 verhindert und somit einer ungewollten Veränderung des Lüftspiels 10 vorbeugt.

Durch die Rückstellung der Gewindespindel 15 erfolgt aufgrund der durch die Vorspannfeder 31 bewirkten spielfreien Gewindekopplung des Außengewindes 15b der Spindel 15 und des Innengewindes 16b des Kolbens 16 ebenfalls unmittelbar eine Rückstellung des Kolbens 16 einschließlich des Nachstellkolbens 18. Durch diesen Vorgang wird der gespeicherte, vorher festgelegte Wert des Lüftspiels 10, also des Nominallüftspiels, eingestellt.

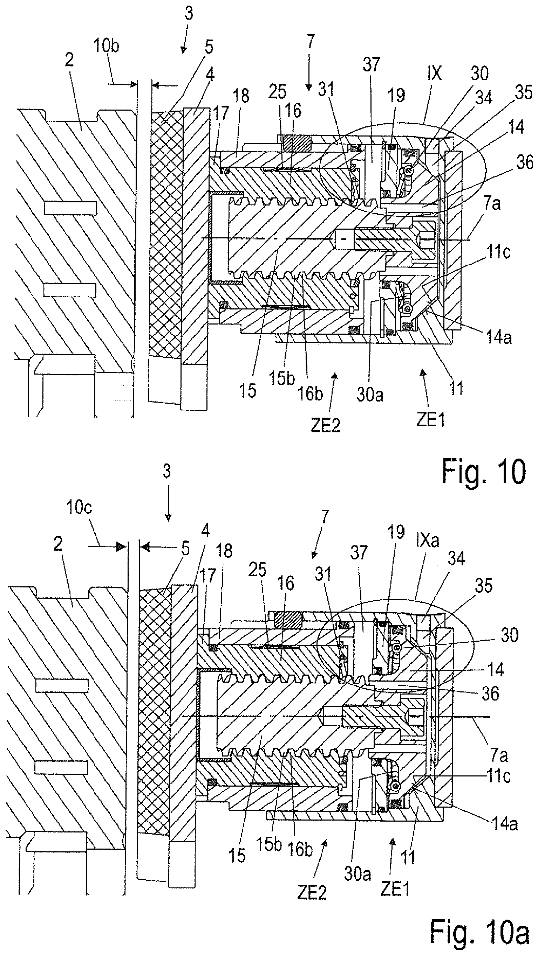

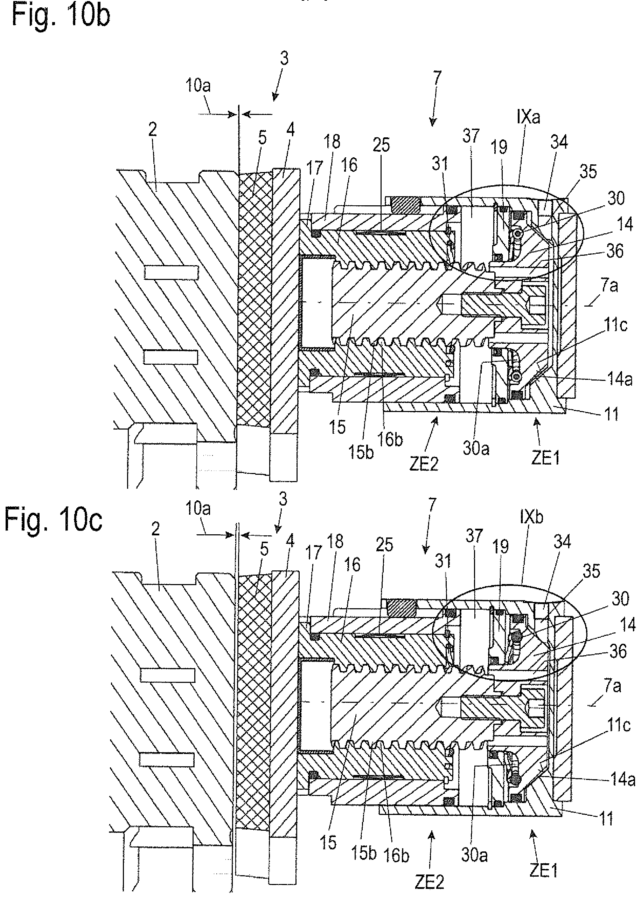

In **Fig. 10****,** **10a-10c** sind schematische Schnittansichten der Nachstelleinrichtung 7 nach Fig. 5 in verschiedenen Betriebszuständen im Falle eines zu großen Lüftspiels 10b gezeigt. Die schematischen vergrößerten Schnittansichten der Bereiche IX, IXa, IXb der Nachstelleinrichtung 7 nach Fig. 10, 10a-10c werden auch von **Fig. 9, 9a-9b** dargestellt. Fig. 10, 10a-10c und 9, 9a-9b bilden zusammen eine Bildfolge der Funktionsweise der Nachstelleinrichtung 7 bei einem zu großen Lüftspiel 10b.

Das Lüftspiel 10b in Fig. 10 entspricht nicht dem Vorgabewert ist vergrößert bzw. zu groß. Fig. 10 und Fig. 10 (vergrößert) zeigen in diesem Fall die Ruhestellung der Nachstelleinrichtung 7, wobei der Spindelkopf 14 mit seinem Außenkegel 14a durch die Rückstellfeder 30a an den Innenkegel 11c des Gehäuses 11 gepresst wird.

Im Falle der Aktivierung der Nachstelleinrichtung 7 strömt zunächst das Druckmedium durch die Anschlussbohrung 34 in den Druckraum 35 der ersten Zylindereinheit ZE1 und schiebt dadurch den Spindelkopf 14 der Spindel 15 von der Ruhestellung in die Arbeitsendstellung, welche in Fig. 10a und Fig. 9a dargestellt ist.

Dabei bewegt sich der Spindelkopf 14 zusammen mit der mit ihm verbundenen Spindel 15 in Richtung der Nachstellerachse 7a auf die Bremsscheibe 2 zu. Der dabei zurückgelegte Weg entspricht dem vorgegebenen Lüftspiel 10 (z.B. 0,5mm für beidseitige Nachstellung oder 1,0mm für einseitige Nachstellung). In dieser Arbeitsendstellung ist der Spindelkopf 14 mittels des Druckmediums in dem Druckraum 35 gegen die Dichtscheibe 19 verstellt und drückt die Rückstellfeder 30a gegen die Dichtscheibe 19.

Durch einen oder mehrere Überströmkanäle 36 im Spindelkopf 14 gelangt das Druckmedium in den Druckraum 37 der zweiten Zylindereinheit ZE2. Aufgrund des zu großen Lüftspiels 10b bei der Ausgangslage in Fig. 10 stellt sich nun ein Lüftspiel 10c mit einem Wert größer Null ein (Fig. 10a).

Da das in der Ausgangslage vorhandene Lüftspiel 10b größer ist als der Vorgabewert, wird die Nachstelleinheit (Spindel 15, Kolben 16 und Nachstellkolben 18) zusammen mit dem Bremsbelag 3 nun an die Bremsscheibe 2 geschoben. Da die Spindel 15 durch den Weg in der ersten Zylindereinheit ZE1 bereits ihre Arbeitsendstellung erreicht hat, ist eine axiale Bewegung der Spindel 15 nicht mehr möglich. Daher findet zwischen der Spindel 15 und dem Kolben 16 eine dem Hub der Nachstelleinheit (also von Kolben 16 und Nachstellkolben 18) entsprechende Verdrehung um die Nachstellerachse 7a statt. Die Möglichkeit einer Verdrehung der Spindel 15 wird durch die selbsthemmungsfreie Auslegung des Gewindetriebs (Außengewinde 15b und Innengewinde 16b) und durch die reibungsarme Abstützung des Spindelkopfes 14 mit Hilfe des Wälzlagers 30 erreicht. Durch die Verdrehung der Spindel 15 findet ein Ausgleich der Lüftspielabweichung in einem einzigen Nachstellschritt statt.

Mit anderen Worten, das in dem Druckraum 37 der zweiten Zylindereinheit ZE2 einströmende Druckmedium drückt den Kolben 16 mit dem Nachstellkolben 18 in Richtung Bremsscheibe 2. Dabei wird aufgrund des nicht selbsthemmenden Gewindes bewirkt, dass sich die durch die Arbeitsendstellung des Spindelkopfes 14 axial blockierte Spindel 15 gegenüber dem Kolben 15 um die Nachstellerachse 7a verdreht. So kann der Kolben 16 zusammen mit dem Nachstellkolben 18 in Richtung auf die Bremsscheibe 2 durch die Druckeinwirkung des Druckmediums verstellt werden und den Bremsbelag 3 an die Bremsscheibe 2 pressen. Dabei wird dann das Lüftspiel 10a mit dem Wert Null erreicht, wie in Fig. 8b und 9a dargestellt. Ist.

Beim Entlüften der Nachstelleinrichtung 7 strömt das Druckmedium aus den Zylindereinheiten ZE1 und ZE2 wieder heraus. Der Spindelkopf 14 und somit die Spindel 15 werden durch die Rückstellfeder 30a unterhalb des Spindelkopfes 14 der Gewindespindel 15 in die Ruhestellung gedrückt. Dies zeigen Fig. 10c und 9b.

Dabei ergibt sich durch den Kegelsitz zwischen dem Außenkegel 14a des Spindelkopfes 14 und dem Gegenprofil des Innenkegels 11c des Gehäuses 11 ein Reibmoment, welches ein Zurückdrehen der mit dem Gewindekopf 14 verbundenen Spindel 15 verhindert und somit einer ungewollten Veränderung des Lüftspiels 10 vorbeugt.

Durch die Rückstellung der Gewindespindel 15 erfolgt aufgrund der durch die Vorspannfeder 31 bewirkten spielfreien Gewindekopplung des Außengewindes 15b der Spindel 15 und des Innengewindes 16b des Kolbens 16 ebenfalls unmittelbar eine Rückstellung des Kolbens 16 und somit der Nachstelleinheit. Durch diesen Vorgang wird der vorgegebene Wert des Lüftspiels 10 eingestellt, wie Fig. 10c und 9b zeigen.

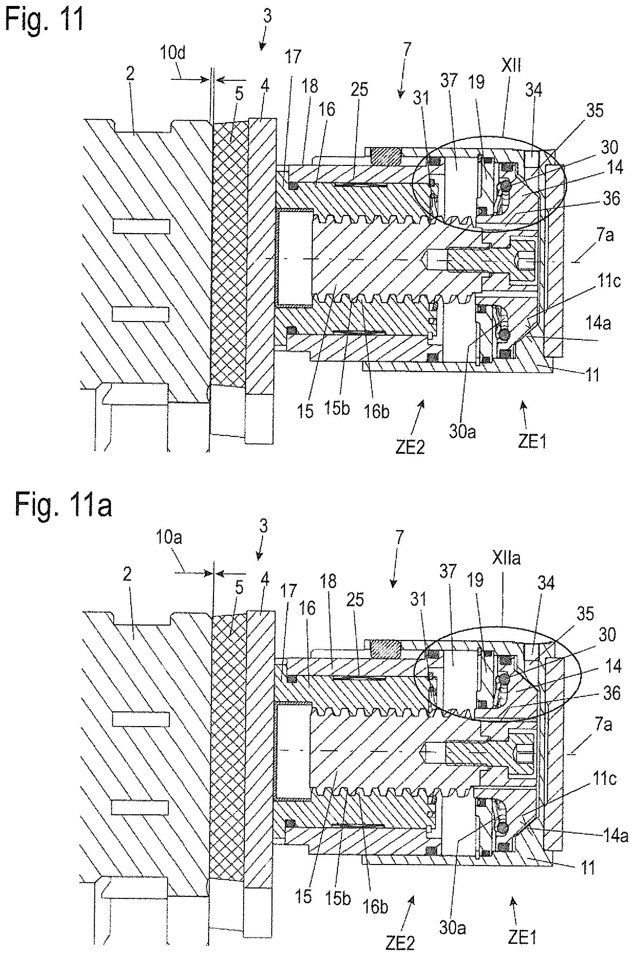

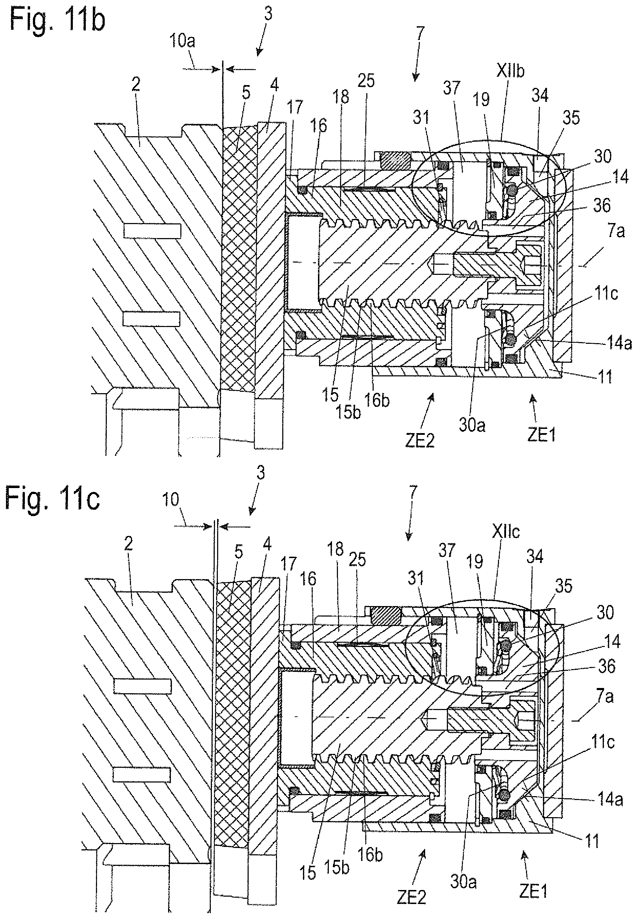

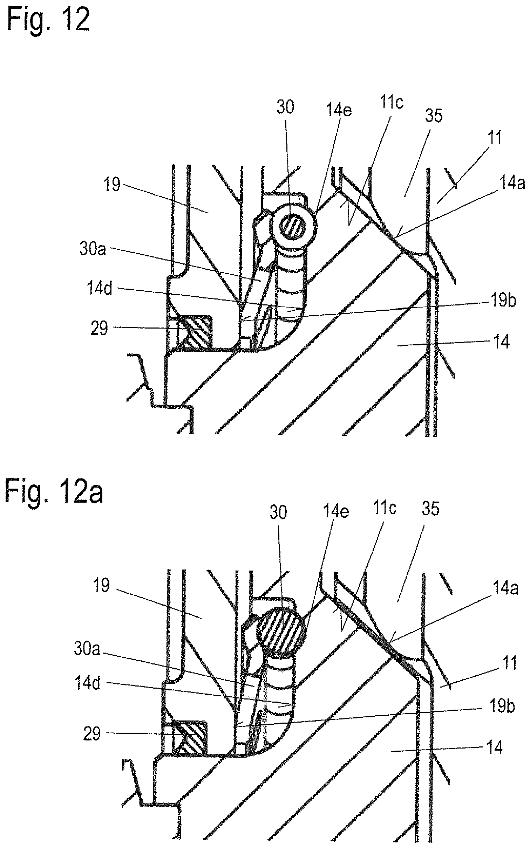

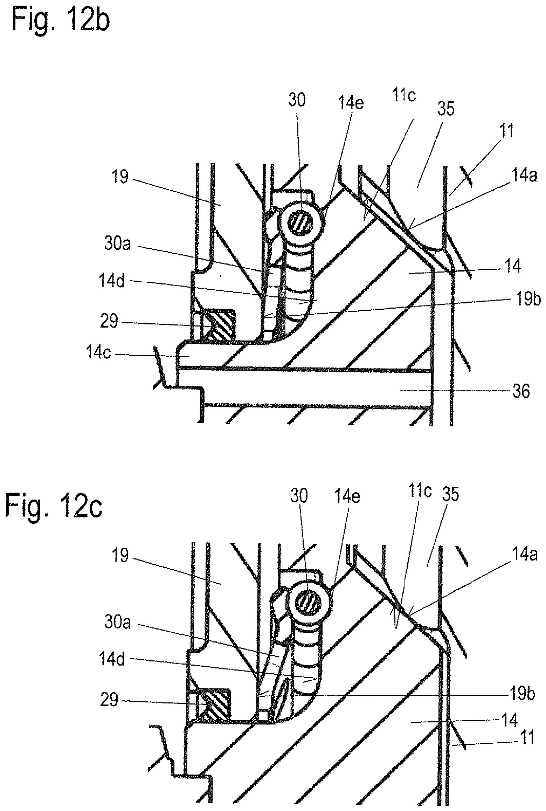

In **Fig. 11****,** **11a-11c** sind schematische Schnittansichten der Nachstelleinrichtung 7 nach Fig. 5 in verschiedenen Betriebszuständen im Falle eines zu kleinen Lüftspiels 10d gezeigt. Die schematischen vergrößerten Schnittansichten der Bereiche XII, XIIa, XIIb, XIIc der Nachstelleinrichtung 7 nach Fig. 11, 11a-11c werden vergrößert in **Fig. 12****,** **12a-12c** dargestellt. Fig. 11, 11a-11c und Fig. 12, 12a-12c bilden zusammen eine Bildfolge der Funktionsweise der Nachstelleinrichtung 7 bei einem zu kleinen Lüftspiel 10d.

Im Falle der Aktivierung der Nachstelleinrichtung 7 strömt zunächst das Druckmedium durch die Anschlussbohrung 34 in den Druckraum 35 der ersten Zylindereinheit ZE1 und schiebt dadurch den Spindelkopf 14 der Spindel 15 von der Ruhestellung in eine vorläufige Zwischenstellung, welche in Fig. 11a und Fig. 12a dargestellt ist.

Durch die Bewegung der Spindel 15 wird auch die komplette Nachstelleinheit, d.h. der Kolben 16 und der Nachstellkolben 18 mit der Spindel 15 in Richtung Bremsscheibe 2 verschoben. Da das Lüftspiel 10d in der Ausgangslage (Fig. 11) zu klein ist, kommt es bereits vor Erreichen der Arbeitsendstellung des Spindelkopfes 14 zu einem Stillstand der Nachstellmechanik, d.h. Kolben 16 und Nachstellkolben 18, wobei das Lüftspiel 10a mit dem Wert Null erreicht ist und der Druckabschnitt 17 am Bremsbelag 3 anliegt.

Durch den aber weiterhin wirkenden Druck des Druckmediums in dem Druckraum 35 der ersten Zylindereinheit ZE1 wird jedoch auf die Spindel 15 eine in axialer Richtung der Nachstellerachse 7a wirkende Kraft ausgeübt. Aufgrund der axialen Bewegung der Spindel 15 ergibt sich ein Abheben des Spindelkopfes 14 vom Kegelsitz und folglich eine starke Reduzierung des Reibmoments am Spindelkopf 14 der Spindel 15. Somit ist ein Verdrehen der Spindel 15 ermöglicht. Die an der Spindel 15 wirkende Axialkraft ergibt in der selbsthemmungsfreien Gewindekopplung zwischen dem Außengewinde 15b der Spindel 15 und dem Innengewinde 16b des Kolbens 16 ein Drehmoment. Durch dieses Drehmoment wird die Spindel 15 solange verdreht, bis der Spindelkopf 14 schließlich seine vorgegebene Arbeitsendstellung an der Dichtscheibe 19 erreicht. Dies ist in Fig. 11b und Fig. 12b gezeigt. Auf diese Weise findet ein Zurückdrehen der Spindel 15 statt. Mit der Rückdrehung der Spindel 15 wird die Lüftspielabweichung, d.h. der Unterschied zwischen dem normalen Lüftspiel 10 und dem zu kleinen Lüftspiel 10d, korrigiert.

Durch den/die Überströmkanal/Überströmkanäle 36 im Spindelkopf 14 der Spindel 15 gelangt das Druckmedium zwar in den Druckraum 37 der zweiten Zylindereinheit ZE2, eine Bewegung findet jedoch nicht statt, da die Nachstelleinheit, d.h. der Kolben 16 und der Nachstellkolben 18, wie vorher beschrieben durch die Bewegung der Spindel 15 bereits zusammen mit dem Bremsbelag 3 an die Bremsscheibe 2 gedrückt wurde.

Beim Entlüften der Nachstelleinrichtung 7 strömt das Druckmedium aus den Zylindereinheiten ZE1 und ZE2 wieder heraus. Der Spindelkopf 14 und somit die Spindel 15 werden durch die Rückstellfeder 30a unterhalb des Spindelkopfes 14 der Gewindespindel 15 in die Ruhestellung gedrückt. Dies zeigen Fig. 11c und 12c.

Dabei ergibt sich durch den Kegelsitz zwischen dem Außenkegel 14a des Spindelkopfes 14 und dem Gegenprofil des Innenkegels 11c des Gehäuses 11 ein Reibmoment, welches ein Zurückdrehen der mit dem Gewindekopf 14 verbundenen Spindel 15 verhindert und somit einer ungewollten Veränderung des Lüftspiels 10 vorbeugt.

Durch die Rückstellung der Gewindespindel 15 erfolgt aufgrund der durch die Vorspannfeder 31 bewirkten spielfreien Gewindekopplung des Außengewindes 15b der Spindel 15 und des Innengewindes 16b des Kolbens 16 ebenfalls unmittelbar eine Rückstellung des Kolbens 16 und somit der Nachstelleinheit. Durch diesen Vorgang wird der vorgegebene Wert des Lüftspiels 10 eingestellt, wie Fig. 11c und 12c zeigen.

Eine weitere Anforderung an die Nachstellvorrichtung ist die Möglichkeit der manuellen Verstellbarkeit. Wenn z.B. die Bremsbeläge 3, 3' bzw. die Reibbeläge 5, 5' das maximale Verschleißmaß erreicht haben, müssen neue Bremsbeläge 3, 3' eingebaut werden. Hierzu müssen die Nachstelleinheiten (Spindel 15, Kolben 16, Nachstellkolben 18) der Nachstelleinrichtungen 7, 7' der Nachstellvorrichtung manuell auf den Ausgangswert zurückgestellt werden.

Diese Möglichkeit ist durch das Verdrehen des Kolbens 16 gegeben. Der Kolben 16 verfügt hierzu an der dem Bremsbelag 3, 3' zugewandten Seite über einen profilierten Kopf, welcher als Kraftangriff für ein entsprechendes Werkzeug dient. Dieser profilierte Kopf ist durch die bereits oben im Zusammenhang mit Fig. 6 und Fig. 7 erwähnte Profilierung 17c des Kragens 17b des Druckabschnitts 17 gebildet. Um den Kolben 16 von außen zurückzudrehen, muss das durch die Reibfeder 25 erzeugte Reibmoment zwischen dem drehbaren Kolben 16 und dem drehfesten Nachstellkoben 18 überwunden werden. Aufgrund dieser Relativbewegungsmöglichkeit zwischen dem Kolben 16 und dem Nachstellkolben 18 ist eine Rückstellung auf die oben beschriebene Weise einfach möglich.

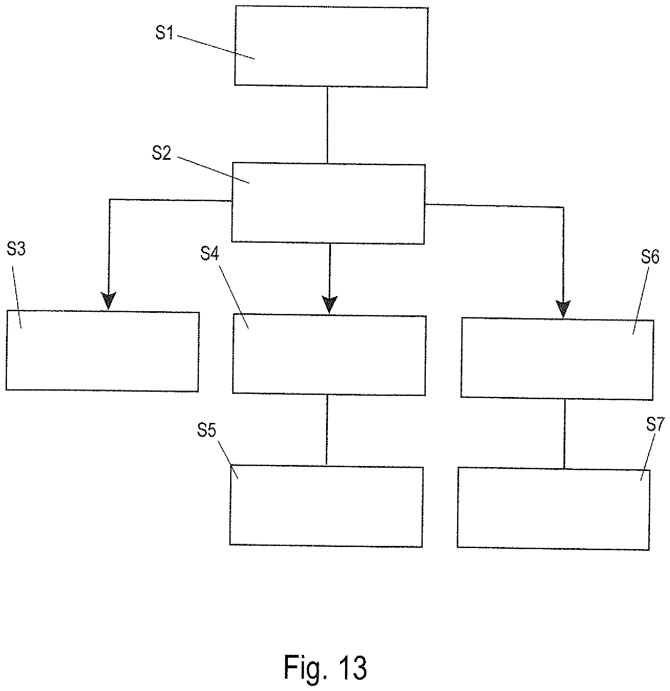

In **Fig. 13** ist ein schematisches Flussdiagramm eines Ausführungsbeispiels eines erfindungsgemäßen Verfahrens zum Einstellen eines Lüftspiels 10 einer Scheibenbremse 1 dargestellt.

Die Nachstelleinrichtungen 7, 7' der Nachstellvorrichtung sind dergestalt ausgebildet, dass eine Aufteilung der Nachstellfunktion in zwei unterschiedliche Ablaufschritte vorgesehen ist. Dabei ist ein Ablaufschritt 1 die Einstellung des Lüftspiels 10 und ein Ablaufschritt 2 die Nachstellung.

In dem Ausführungsbeispiel des Verfahrens beinhalten ein erster und ein zweiter Verfahrensschritt S1 und S2 den Ablaufschritt 1. Das vorher festgelegte Lüftspiel 10 ist in der ersten Zylindereinheit ZE1 konstruktiv festgelegt und wird nach Aktivierung der Nachstelleinrichtung 7 (stellvertretend für alle Nachstelleinrichtungen 7, 7' der Nachstellvorrichtung) von der Ruhestellung ausgehend durchlaufen. Bei der Aktivierung wird die Nachstelleinrichtung 7 mit dem Druckmedium beaufschlagt.

In einem zweiten Verfahrensschritt S2 wird festgestellt, ob die Arbeitsendstellung in der ersten Zylindereinheit ZE1 erreicht wird.

Wenn die Arbeitsendstellung erreicht ist und der Kolben 16 und der Arbeitskolben 18 der Nachstelleinheit trotz Druckbeaufschlagung des zweiten Druckraums 37 der zweiten Zylindereinheit ZE2 keine Axialbewegung in Richtung der Nachstellerachse 7a mehr aufweisen, weil der Bremsbelag 3 bereits an der Bremsscheibe 2 anliegt und das aktuelle Lüftspiel 10a zu Null geworden ist, wird in einem Verfahrensschritt S3 die Nachstelleinrichtung 7 entlüftet. Dabei stellt die erste Zylindereinheit ZE1 mit dem Spindelkopf 14 in der Ruhestellung das vorher festgelegte Lüftspiel 10 wieder ein. Dies ist der Fall eines unveränderten Lüftspiels 10.

In dem Fall eines zu großen Lüftspiels 10b werden der Kolben 16 und der Arbeitskolben 18 der Nachstelleinheit durch weitere Druckbeaufschlagung des zweiten Druckraums 37 der zweiten Zylindereinheit ZE2 weiter in Richtung der Nachstellerachse 7a auf den Bremsbelag 3 zubewegt. Dies erfolgt in einem Verfahrensschritt S4, wobei aufgrund der in der Arbeitsendstellung axial blockierten Spindel 15 diese sich durch die Bewegung des Kolbens 16 und des Nachstellkolbens 18 um die Nachstellerachse 7a dreht, bis der Kolben 16 und der Nachstellkolben 18 den Bremsbelag 3 zum Anliegen an der Bremsscheibe 2 gebracht haben. Der auf diese Weise zurückgelegte Weg der Kolben 16, 18 relativ zu der Spindel 15 und somit relativ zu dem Spindelkopf 14, dessen Hub das Nominallüftspiel ist, entspricht einer Differenz zwischen dem zu großen Lüftspiel 10b und dem Nominallüftspiel 10. Damit erfolgt eine Verkleinerung des zu großen Lüftspiels 10b.

Dann wird im Verfahrensschritt S5 die Nachstelleinrichtung 7 entlüftet, wobei die erste Zylindereinheit ZE1 mit dem Spindelkopf 14 in der Ruhestellung das vorher festgelegte Lüftspiel 10 wieder einstellt.

In dem anderen Fall, in welchem das aktuelle Lüftspiel 10d zu klein ist, wird die Arbeitsendstellung nicht erreicht, wobei von dem Spindelkopf 14 als Druckkolben der ersten Zylindereinheit ZE1 eine vorläufige Zwischenstellung eingenommen wird. Der Kolben 16 und der Arbeitskolben 18 der Nachstelleinheit bewegen sich trotz Druckbeaufschlagung des zweiten Druckraums 37 der zweiten Zylindereinheit ZE2 in Richtung der Nachstellerachse 7a nicht mehr weiter, weil der Bremsbelag 3 bereits an der Bremsscheibe 2 anliegt und das aktuelle Lüftspiel 10a zu Null geworden ist.

In einem Verfahrensschritt S6 wird nun aufgrund der weiterhin bestehenden Druckbeaufschlagung des Spindelkopfes 14 und dessen vorläufiger Zwischenstellung ohne das Reibmoment der Ruhestellung die Spindel 15, welche mit dem Spindelkopf 14 fest verbunden ist, in Richtung der Nachstellerachse 7a mit einer Axialkraft beaufschlagt, wobei durch den Gewindeeingriff von Spindel 15 und blockiertem Kolben 16 sich die Spindel 15 dreht und sich axial auf die Bremsscheibe 2 zubewegt. Diese Bewegung wird angehalten, wenn der Spindelkopf 14 die Arbeitsendstellung erreicht hat. Der auf diese Weise zurückgelegte Weg der Spindel 15 und somit des Spindelkopfes 14, dessen Hub das vorher festgelegte Lüftspiel 10 ist, relativ zu dem Kolben 16 und dem Kolben 18 entspricht einer Differenz zwischen dem zu kleinen Lüftspiel 10d und dem Nominallüftspiel 10. Damit erfolgt eine Vergrößerung des zu kleinen Lüftspiels 10d.

Schließlich wird in einem Verfahrensschritt S7 die Nachstelleinrichtung 7 entlüftet. Dabei stellt die erste Zylindereinheit ZE1 mit dem Spindelkopf 14 in der Ruhestellung das vorher festgelegte Lüftspiel 10 wieder ein.

Die oben beschriebene Nachstellvorrichtung mit ihren Nachstelleinrichtungen 7, 7' weist folgende Vorteile auf:
- Die Nachstellung wirkt in beide Richtungen, es können somit zu große Lüftspiele 10b als auch zu kleine Lüftspiele 10d korrigiert werden.
- Die Lüftspielkorrektur erfolgt einstufig und unmittelbar nach der Aktivierung der Nachstellung. Dadurch kann eine Lüftspielabweichnug sehr schnell korrigiert werden und ein sicherer Betriebszustand für die Scheibenbremse 1 kurzfristig erreicht werden.
- Die Nachstellmechanik bzw. die Nachstelleinrichtungen 7, 7' können in einem als Festsattel ausgebildeten Bremssattel 6 sowohl für die rückenseitige (felgenseitige) als auch für die zuspannseitige Nachstellung verwendet werden.
- Die Maßtoleranzen üben einen nur geringen Einfluss auf das Lüftspiel 10 aus, da
   ∘ die Gewindespieltoleranz ohne Einfluss ist.
   ∘ nur eine geringe Anzahl von Bauteilen Einfluss auf das Lüftspiel 10 hat.
- Die Lüftspieleinstellung (Nachstellung) ist unabhängig von der Bremsbetätigung und erlaubt somit eine selektive Aktivierung der Nachstellung. Die Radbremsen in einem Fahrzeug können hinsichtlich Nachstellung z.B. individuell angesteuert werden.
- Durch die Aktivierung des Nachstellmechanismus bzw. der Nachstelleinrichtungen 7, 7' können Zusatzfunktionen generiert werden, z.B. Säubern der Reibflächen der Bremsscheibe 2 durch leichtes Anlegen der Beläge 3, 3', Entfernen des Wasserfilms auf der Reibfläche der Bremsscheibe 2 etc.
- Die Nachstellung kann in Bremssätteln verwendet werden, die sowohl als Schiebe- / Schwimmsätteln als auch als Festsättel ausgebildet sind.
- Die Bremsbeläge können durch den Nachstellmechanismus aktiv zurückgestellt werden. Somit kann eine Restschleifwirkung der Bremsbeläge 3, 3' vermieden werden.

Im Fall eines Schiebe- oder Schwimmsattels ist es möglich, dass die Nachstellvorrichtung nur die zuspannseitige Nachstelleinrichtung 7 aufweist.

Die Scheibenbremse 1 kann unterschiedliche Kraftantriebe aufweisen. Der Zuspannvorrichtung ZV wird hier z.B. pneumatisch betätigt. Zu Aufbau und Funktion einer pneumatischen Scheibenbremse 1 wird auf die entsprechende Beschreibung der DE 197 29 024 C1, insbesondere auf die DE 10 2012 108 672 B3 verwiesen.

Es ist auch möglich, dass die Nachstellvorrichtung nur eine zuspannseitige Nachstelleinrichtung 7 und nur eine rückenseitige Nachstelleinrichtung 7' aufweist, die pro Bremsbelag 3, 3' mittig angeordnet sind, beispielsweise bei kleineren Scheibenbremsen. Es sind natürlich auch mehr als zwei Nachstelleinrichtungen 7, 7' pro Seite denkbar.

Die Erfindung wird durch die oben beschriebenen Ausführungsbeispiele nicht eingeschränkt. Sie ist im Rahmen der beigefügten Ansprüche modifizierbar.

So ist es z.B. denkbar, dass anstelle der Dichtscheibe 19 ein fester Zwischenboden vorgesehen sein kann.

### Bezugszeichenliste

- 1: Scheibenbremse
- 2: Bremsscheibe
- 2a: Bremsscheibendrehachse
- 3,3': Bremsbelag
- 4,4': Belagträgerplatte
- 4a, 4'a: Druckseite
- 5, 5': Reibbelag
- 6: Bremssattel
- 6a: Zuspannabschnitt
- 6b: Rückenabschnitt
- 6c: Flansch
- 6d: Innenkegel
- 6e: Innenbohrung
- 6f: Bodenwand
- 7,7': Nachstelleinrichtung
- 7a, 7'a: Nachstellerachse
- 8, 8': Anschluss
- 9: Druckleitung
- 10, 10a...10d: Lüftspiel
- 11: Gehäuse
- 11a: Aufnahme
- 11b: Innenbohrung
- 11c: Innenkegel
- 11d: Nut
- 11e: Absatz
- 11f: Bodenwand
- 12: Druckplatte
- 13: Verbindungselement
- 14: Spindelkopf
- 14a: Außenkegel
- 14b: Randabschnitt
- 14c: Führungsabschnitt
- 14d: Lagerabschnitt
- 14e: Lageraufnahme
- 15: Spindel
- 15a: Vorsprung
- 15b: Außengewinde
- 16: Kolben
- 16a: Endabschnitt
- 16b: Innengewinde
- 16c: Außenfläche
- 16d: Bohrung
- 16e: Aufnahme
- 17, 17': Druckabschnitt
- 17a: Druckfläche
- 17b: Kragen
- 17c: Profilierung
- 18: Nachstellkolben
- 18a, 18b: Endabschnitt
- 18c: Stirnfläche
- 18d: Längsnut
- 18e: Außenfläche
- 18f: Durchgangsbohrung
- 19: Dichtscheibe
- 19a: Durchgangsbohrung
- 19b: Stirnfläche
- 20: Führungselement
- 21, 21': Dichtelement
- 22: Dichtkappe
- 23: Befestigungsabschnitt
- 23a: Führungsabschnitt
- 24: Befestigungselement
- 25: Reibfeder
- 26, 26a, 27, 28, 29: Dichtelement
- 30: Wälzlager
- 30a: Rückstellfeder
- 31: Vorspannfeder
- 31a: Verbindungsabschnitt
- 31b, 31c: Bogenabschnitt
- 31d: Endabschnitt
- 32, 33: Sicherungsring
- 34: Anschlussbohrung
- 35: Druckraum
- 36: Überstromkanal
- 37: Druckraum
- 38: Ausnehmung
- 39: Gewindeflanke
- FS: Felgenseite
- S1-S7: Verfahrensschritt
- ZE1, ZE2: Zylindereinheit
- ZS: Zuspannseite
- ZV: Zuspannvorrichtung

## Patentansprüche

1. Scheibenbremse (1), vorzugsweise druckluftbetätigt, insbesondere für ein Kraftfahrzeug, mit einer Bremsscheibe (2), einem die Bremsscheibe (2) übergreifenden Bremssattel (6), in welchem eine Zuspannvorrichtung (ZV) angeordnet ist, wobei beiderseits der Bremsscheibe (2) jeweils ein Bremsbelag (3, 3') vorgesehen ist, und mit einer Nachstellvorrichtung mit mindestens einer Nachstelleinrichtung (7, 7') zur Nachstellung eines Reibflächenverschleißes an Bremsbelägen (3, 3') und Bremsscheibe (2), wobei die mindestens eine Nachstelleinrichtung (7, 7') unabhängig von der Zuspanneinrichtung (ZV) mit einem Druckmedium betreibbar ist, wobei die mindestens eine Nachstelleinrichtung (7, 7') mit einer ersten Zylindereinheit (ZE1) mit einem ersten Druckkolben ausgebildet ist, **dadurch gekennzeichnet, dass** die mindestens eine Nachstelleinrichtung (7, 7') mit einer zweiten Zylindereinheit (ZE2) mit einem zweiten Druckkolben ausgebildet ist, wobei der zweite Druckkolben der zweiten Zylindereinheit (ZE2) einen Kolben (16), der mit dem Bremsbelag (3, 3') in Kontakt steht, und einen Nachstellkolben (18), der auf dem Kolben (16) angeordnet ist, aufweist.

2. Scheibenbremse (1) nach Anspruch 1,
**dadurch gekennzeichnet, dass**
ein Hub des ersten Druckkolbens der ersten Zylindereinheit (ZE1) einem vorher festgelegten Lüftspiel (10) der Scheibenbremse (1) entspricht.

3. Scheibenbremse (1) nach Anspruch 2,
**dadurch gekennzeichnet, dass**
die mindestens eine Nachstelleinrichtung (7) ein ortsfestes Gehäuse (11; 6b) mit einer Innenbohrung (11b; 6e), einen Spindelkopf (14), eine Spindel (15), einen Kolben (16), einen Nachstellkolben (18) und eine Dichtscheibe (19) umfasst.

4. Scheibenbremse (1) nach Anspruch 3,
**dadurch gekennzeichnet, dass**
das ortsfeste Gehäuse (6b) ein Rückenabschnitt (6b) des Bremssattels (6) ist, wobei die Innenbohrung (6e) in den Rückenabschnitt (6b) eingeformt ist.

5. Scheibenbremse (1) nach Anspruch 3 oder 4,
**dadurch gekennzeichnet, dass**
die erste Zylindereinheit (ZE1) und die zweite Zylindereinheit (ZE2) in dem Gehäuse (11; 6b) in Reihe angeordnet und durch die Dichtscheibe (19) oder durch einen festen Zwischenboden getrennt sind.

6. Scheibenbremse (1) nach Anspruch 5,
**dadurch gekennzeichnet, dass**
die Dichtscheibe (19) oder der feste Zwischenboden die Innenbohrung (11b; 6e) in einen im Wesentlichen geschlossenen Raum zwischen der Dichtscheibe (19) oder dem festen Zwischenboden und einer Bodenwand (11f; 6f) des Gehäuses (11; 6b) und in einen offenen Raum zwischen der Dichtscheibe (19) und einer zur Bremsscheibe (2) weisenden Öffnung der Innenbohrung (11b) teilt, wobei die Dichtscheibe (19) mittels eines Dichtelementes (28) an ihrem Außenumfang gegenüber der Innenbohrung (11b; 6e) abgedichtet ist.

7. Scheibenbremse (1) nach einem Anspruch 6,
**dadurch gekennzeichnet, dass**
die erste Zylindereinheit (ZE1) den geschlossenen Raum und den Spindelkopf (14) als ersten Druckkolben aufweist, wobei der Spindelkopf (14) mit der Spindel (15) verbunden ist, und wobei die Spindel (15) in der zweiten Zylindereinheit (ZE2) mit dem zweiten Druckkolben in Eingriff steht.

8. Scheibenbremse (1) nach Anspruch 7,
**dadurch gekennzeichnet, dass**
der Spindelkopf (14) mit einem zur Bodenwand (11f; 6f) des Gehäuses (11; 6b) weisenden Außenkegel (14a) oder einer anderen Außenkontur versehen ist, wobei an der Innenseite der Bodenwand (11f; 6f) ein Innenkegel (11c; 6d) oder eine mit der anderen Außenkontur korrespondierende Gegenkontur angeordnet ist, welcher mit dem Außenkegel (14a) oder mit der anderen Außenkontur des Spindelkopfes (14) kommuniziert.

9. Scheibenbremse (1) nach Anspruch 8,
**dadurch gekennzeichnet, dass**
ein Bereich zwischen dem Außenkegel (14a) oder der anderen Außenkontur des Spindelkopfes (14) und dem Innenkegel (11c; 6d) oder der Gegenkontur des Gehäuses (11; 6b) mittels eines Dichtelementes (27) am Außenumfang des Spindelkopfes (14) gegenüber der Innenwand des Gehäuses (11; 6b) abgedichtet ist und einen Druckraum (35) der ersten Zylindereinheit (ZE1) bildet, welcher mit einem Anschluss (8) für ein Druckmedium kommuniziert.

10. Scheibenbremse (1) nach Anspruch 9,
**dadurch gekennzeichnet, dass**
der Spindelkopf (14) als erster Druckkolben der ersten Zylindereinheit (ZE1) zusammen mit der Spindel (15) in Richtung einer Nachstellerachse (7a, 7'a) aus einer Ruhestellung der Nachstelleinrichtung (7, 7'), in welcher der Spindelkopf (14) mit seinem Außenkegel (14a) oder seiner anderen Außenkontur in Kontakt mit dem Innenkegel (11c; 6d) oder der Gegenkontur des Gehäuses (11; 6b) steht, in eine Arbeitsendstellung, welche durch die Dichtscheibe (19) festgelegt ist, und zurück längsverschiebbar ausgebildet ist, wobei dieser Hub des Spindelkopfes (14) dem vorher festgelegten Lüftspiel (10) entspricht.

11. Scheibenbremse (1) nach Anspruch 10,
**dadurch gekennzeichnet, dass**
der Spindelkopf (14) der ersten Zylindereinheit (ZE1) zusammen mit der Spindel (15) um die Nachstellerachse (7a, 7'a) verdrehbar ausgebildet ist, wobei eine Verdrehbarkeit des Spindelkopfes (14) mit der Spindel (15) in der Ruhestellung aufgrund eines hohen Reibmomentes zwischen dem Außenkegel (14a) oder der anderen Außenkontur des Spindelkopfes (14a) und des Innenkegels (11c; 6d) oder der Gegenkontur blockiert ist.

12. Scheibenbremse (1) nach Anspruch 11,
**dadurch gekennzeichnet, dass**
der Spindelkopf (14a) durch ein axiales Wälzlager (30) über eine Rückstellfeder (30a) an der Dichtscheibe (19) abgestützt ist, wobei die Rückstellfeder (30a) eine axiale Kraft in Richtung der Nachstellerachse (7a, 7'a) auf den Spindelkopf (14) derart ausübt, dass der Spindelkopf (14) in die Ruhestellung gedrückt ist, in welcher sein Außenkegel (14a) oder seine andere Außenkotur an dem Innenkegel (11c; 6d) oder der Gegenkontur des Gehäuses (11;6b) fest anliegt.

13. Scheibenbremse (1) nach Anspruch 12,
**dadurch gekennzeichnet, dass**
der Spindelkopf (14) einen Führungsabschnitt (14c) aufweist, welcher sich durch eine Durchgangsbohrung (19a) der Dichtscheibe (19) oder des Zwischenbodens erstreckt und eine Lagerung und axiale Führung für den Spindelkopf (14) an der Dichtscheibe (19) oder des Zwischenbodens bildet, wobei ein Dichtelement (29) zwischen Dichtscheibe (19) oder Zwischenboden und Führungsabschnitt (14c) vorgesehen ist.

14. Scheibenbremse (1) nach Anspruch 13,
**dadurch gekennzeichnet, dass**
der Spindelkopf (14) zumindest einen Axialkanal als Überstromkanal (36) aufweist, welcher den Druckraum (35) der ersten Zylindereinheit (ZE1) mit einem Druckraum (37) der zweiten Zylindereinheit (ZE2) verbindet.

15. Scheibenbremse (1) nach Anspruch 14,
**dadurch gekennzeichnet, dass**
die zweite Zylindereinheit (ZE2) den offenen Raum, den Kolben (16) und den Nachstellkolben (18) als zweiten Druckkolben umfasst, wobei der Kolben (16) und der Nachstellkolben (18) in dem offenen Raum in der Innenbohrung (11b; 6e) längsverschiebbar sind, wobei der Kolben (16) zusätzlich um die Nachstellerachse (7a; 7'a) verdrehbar ist.

16. Scheibenbremse (1) nach Anspruch 15,
**dadurch gekennzeichnet, dass**
der Druckraum (37) der zweiten Zylindereinheit (ZE2) in der Innenbohrung (11b; 6e) zwischen Endabschnitten des Kolbens (16) und des Nachstellkolbens (18) und der Dichtscheibe (19) oder dem Zwischenboden festgelegt ist.

17. Scheibenbremse (1) nach Anspruch 16,
**dadurch gekennzeichnet, dass**
der Kolben (16) in einer Durchgangsbohrung (18f) des Nachstellkolbens (18) koaxial zu diesem und zu der Nachstellerachse (7a, 7'a) angeordnet ist, wobei der Nachstellkolben (18) auf dem Kolben (16) axial festgelegt und gegenüber diesem mit einem Dichtelement (26) abgedichtet ist, und der Kolben (16) gegenüber dem Nachstellkolben (18) um die Nachstellerachse (7a, 7'a) verdrehbar ist, wobei der Nachstellkoben (18) gegenüber der Innenbohrung (11b; 6e) des Gehäuses (11; 6b) durch ein Dichtelement (26a) abgedichtet ist.

18. Scheibenbremse (1) nach Anspruch 17,
**dadurch gekennzeichnet, dass**
zwischen dem Kolben (16) und dem Nachstellkolben (18) mindestens eine Reibfeder (25) vorgesehen ist, mittels welcher ein beeinflussbares Reibmoment zwischen dem Kolben (16) und dem Nachstellkolben (18) erzeugt wird.

19. Scheibenbremse (1) nach Anspruch 18,
**dadurch gekennzeichnet, dass**
der Nachstellkolben (18) durch mindestens ein oder mehrere als Gleitsteine ausgebildete Führungselemente (20) gegen Verdrehen gegenüber dem ortsfesten Gehäuse (11; 6b) gesichert ist.

20. Scheibenbremse (1) nach Anspruch 19,
**dadurch gekennzeichnet, dass**
die Spindel (15) als eine Gewindespindel mit einem Außengewinde (15b) ausgebildet ist, sich durch die Innenbohrung (11b; 6e) des Gehäuses (11; 6b) erstreckt und mit dem Kolben (16) über ihr Außengewinde (15b) mit einem Innengewinde (16b) des Kolbens (16) in Eingriff steht.

21. Scheibenbremse (1) nach Anspruch 20,
**dadurch gekennzeichnet, dass**
das Außengewinde (15b) der Spindel (15) und das Innengewinde (16b) des Kolbens (16) als selbsthemmungsfreie Gewinde ausgeführt sind.

22. Scheibenbremse (1) nach Anspruch 20 oder 21,
**dadurch gekennzeichnet, dass**
eine Vorspannfeder (31) zwischen der Spindel (15) und dem Kolben (16) vorgesehen ist, mittels welcher das Außengewinde (15b) der Spindel (15) gegenüber dem Innengewinde (16b) des Kolbens axial vorgespannt ist.

23. Scheibenbremse (1) nach einem der Ansprüche 20 bis 22,
**dadurch gekennzeichnet, dass**
sich das Innengewinde (16b) des Kolbens (16) von einem zur Dichtscheibe (19) weisenden Endabschnitt (16a) des Kolbens (16) in Richtung auf die Bremsscheibe (2) erstreckt und in eine axiale Bohrung (16d) mündet, wobei die axiale Bohrung mit einer Dichtkappe (22) oder durch eine andere Dichtmethode druckdicht verschlossen ist.

24. Scheibenbremse (1) nach Anspruch 23,
**dadurch gekennzeichnet, dass**
der Druckraum (37) der zweiten Zylindereinheit (ZE2) durch das Dichtelement (26) zwischen dem Kolben (16) und dem Nachstellkolben (18), durch das Dichtelement (26a) zwischen dem Nachstellkolben (18) und der Innenbohrung (11b; 6e) des Gehäuses (11; 6b) und durch die Dichtkappe (22) in der axialen Bohrung (16d) des Kolbens (16) gegenüber der Atmosphäre abgedichtet ist.

25. Scheibenbremse (1) nach einem der vorhergehenden Ansprüche,
**dadurch gekennzeichnet, dass**
der Kolben (16) mit dem Bremsbelag (3, 3') über einen Druckabschnitt (17, 17') in Kontakt steht, wobei der Druckabschnitt (17, 17') einen umlaufenden Kragen (17b) mit einer Profilierung (17c) als ein Kraftangriff für eine manuelle Rückstellung durch Verdrehung des Kolbens (16) aufweist.

26. Verfahren zum Einstellen eines Lüftspiels (10) einer Scheibenbremse (1) nach einem der vorhergehenden Ansprüche, vorzugsweise druckluftbetätigt, insbesondere für ein Kraftfahrzeug, mit einer Bremsscheibe (2), einem die Bremsscheibe (2) übergreifenden Bremssattel (3), in dem eine Zuspannvorrichtung (ZV) angeordnet ist, wobei beiderseits der Bremsscheibe (2) jeweils ein Bremsbelag (3, 3') vorgesehen ist, und mit einer Nachstellvorrichtung mit mindestens einer Nachstelleinrichtung (7, 7') zur Nachstellung eines Reibflächenverschleißes an Bremsbelägen (3, 3') und Bremsscheibe (2), wobei die mindestens eine Nachstelleinrichtung (7, 7') unabhängig von der Zuspanneinrichtung (ZV) mit einem Druckmedium betreibbar ist,
**gekennzeichnet durch**
die Verfahrensschritte
S1 Aktivieren der Nachstelleinrichtung (7, 7') durch Beaufschlagung mit einem Druckmedium und Verstellen eines Spindelkopfes (14) der ersten Zylindereinheit (ZE1) ausgehend von einer Ruhestellung;
S2 Feststellen, ob der Spindelkopf (14) eine Arbeitsendstellung in der ersten Zylindereinheit (ZE1) erreicht;
S3 Wiedereinstellen des vorher in der ersten Zylindereinheit (ZE1) konstruktiv festgelegten Lüftspiels (10) durch die erste Zylindereinheit (ZE1) durch Entlüften der Nachstelleinrichtung (7, 7'), wenn die Arbeitsendstellung erreicht ist und der Bremsbelag (3, 3') bereits an der Bremsscheibe (2) anliegt und ein aktuelles Lüftspiel (10a) zu Null geworden ist; oder
S4 Verstellen eines Kolbens (16) und eines damit verbundenen Arbeitskolbens (18) durch die zweite Zylindereinheit (ZE2), wenn die Arbeitsendstellung erreicht ist und der Bremsbelag (3, 3') aufgrund eines zu großen Lüftspiels (10b) noch nicht an der Bremsscheibe (2) anliegt; und
S5 Wiedereinstellen des vorher in der ersten Zylindereinheit (ZE1) konstruktiv festgelegten Lüftspiels (10) durch die erste Zylindereinheit (ZE1) durch Entlüften der Nachstelleinrichtung (7, 7'), wenn der Bremsbelag (3, 3') an der Bremsscheibe (2) anliegt und ein aktuelles Lüftspiel (10a) zu Null geworden ist; oder
S6 Weiterverstellen des Spindelkopfes (14) aus einer Zwischenstellung durch die erste Zylindereinheit (ZE1), wenn der Spindelkopf (14) die Arbeitsendstellung noch nicht erreicht hat und der Bremsbelag (3, 3') aufgrund eines zu kleinen Lüftspiels (10d) an der Bremsscheibe (2) anliegt und ein aktuelles Lüftspiel (10a) zu Null geworden ist; und
S7 Wiedereinstellen des vorher in der ersten Zylindereinheit (ZE1) konstruktiv festgelegten Lüftspiels (10) durch die erste Zylindereinheit (ZE1) durch Entlüften der Nachstelleinrichtung (7, 7'), wenn der Spindelkopf (14) die Arbeitsendstellung erreicht hat.

27. Verfahren nach Anspruch 26,
**dadurch gekennzeichnet, dass**
in dem Verfahrensschritt S4 eine Verkleinerung des zu großen Lüftspiels (10b) erfolgt, indem eine in der Arbeitsendstellung durch den mit ihr verbundenen Spindelkopf (14) axial blockierte Spindel (15) sich durch die Bewegung des Kolbens (16) und des Nachstellkolbens (18) bewirkt durch einen selbsthemmungsfreien Geweindeeingriff zwischen Spindel (15) und Kolben (16) um eine Nachstellerachse (7a, 7'a) dreht, bis der Kolben (16) und der Nachstellkolben (18) den Bremsbelag (3, 3') zum Anliegen an der Bremsscheibe (2) gebracht haben.

28. Verfahren nach Anspruch 26 oder 27,
**dadurch gekennzeichnet, dass**
in dem Verfahrensschritt S6 eine Vergrößerung des zu kleinen Lüftspiels (10d) erfolgt, indem eine in der Zwischenstellung axial verstellbare Spindel (15) durch die Bewegung des mit ihr verbundenen Spindelkopfes (14) verstellt wird und sich durch einen selbsthemmungsfreien Gewindeeingriff von Spindel (15) und blockiertem Kolben (16) dreht, bis der Spindelkopf (14) die Arbeitsendstellung erreicht.

29. Verfahren nach einem der Anspruch 26 bis 28,
**dadurch gekennzeichnet, dass**
in den Verfahrensschritten S3, S5 und S7 der Spindelkopf (14) nach dem Entlüften aus der Arbeitsendstellung mittels einer Rückstellfeder (30a) in die Ruhestellung zurückgestellt wird, wobei das in der ersten Zylindereinheit (ZE1) konstruktiv vorher festgelegte Lüftspiel (10) wieder eingestellt wird.

## Claims

1. Disc brake (1), preferably actuated by means of compressed air, in particular for a motor vehicle, comprising a brake disc (2), a brake caliper (6) which engages around the brake disc (2) and in which a clamping device (ZV) is arranged, wherein a brake pad (3, 3') is provided in each case on both sides of the brake disc (2), and comprising an adjuster device having at least one adjuster means (7, 7') for adjusting friction surface wear on the brake pads (3, 3') and brake disc (2), wherein the at least one adjuster means (7, 7') can be operated independently of the clamping device (ZV) by means of a pressure medium,
**wherein**
the at least one adjuster means (7, 7') is designed having a first cylinder unit (ZE1) having a first pressure piston, **characterised in that**
the at least one adjuster means (7, 7') is designed
having a second cylinder unit (ZE2) having a second
pressure piston, wherein the second pressure piston of the second cylinder unit (ZE2) comprises a piston (16), which is in contact with the brake pad (3, 3'), and an adjuster piston (18), which is arranged on the piston (16).

2. Disc brake (1) according to claim 1,
**characterised in that**
a stroke of the pressure piston of the first cylinder unit (ZE1) corresponds to a previously defined clearance (10) of the disc brake (1).

3. Disc brake (1) according to claim 2,
**characterised in that**
the at least one adjuster means (7) comprises a stationary housing (11; 6b) having an internal bore (11b: 6e), and comprises a spindle head (14), a spindle (15), a piston (16), an adjuster piston (18) and a sealing disc (19).

4. Disc brake (1) according to claim 3,
**characterised in that**
the stationary housing (6b) is a back portion (6b) of the brake caliper (6), wherein the internal bore (6e) is formed in the back portion (6b).

5. Disc brake (1) according to claim 3 or 4,
**characterised in that**
the first cylinder unit (ZE1) and the second cylinder unit (ZE2) are arranged in a row in the housing (11; 6b) and are separated by the sealing disc (19) or by a fixed intermediate base.

6. Disc brake (1) according to claim 5,
**characterised in that**
the sealing disc (19) or the fixed intermediate base divides the internal bore (11b; 6e) into a substantially enclosed space between the sealing disk (19) or the fixed intermediate base and a base wall (11f; 6f) of the housing (11; 6b) and an open space between the sealing disc (19) and an opening of the internal bore (11b) that points towards the brake disc (2), wherein the sealing disc (19) is sealed off from the internal bore (11b; 6e) by means of a sealing element (28) on its outer periphery.

7. Disc brake (1) according to claim 6,
**characterised in that**
the first cylinder unit (ZE1) comprises the enclosed space and the spindle head (14) as the first pressure piston, wherein the spindle head (14) is connected to the spindle (15), and wherein the spindle (15) is engaged in the second cylinder unit (ZE2) having the second pressure piston.

8. Disc brake (1) according to claim 7,
**characterised in that**
the spindle head (14) is provided with an outer cone (14a) or another outer contour that points towards the base wall (11f; 6f) of the housing (11; 6b), wherein an inner cone (11c; 6d) or a mating contour corresponding with the other outer contour is arranged on the inside of the base wall (11f; 6f), which inner cone communicates with the outer cone (14a) or with the other outer contour of the spindle head (14).

9. Disc brake (1) according to claim 8,
**characterised in that**
a region between the outer cone (14a) or the other outer contour of the spindle head (14) and the inner cone (11c; 6d) or the mating contour of the housing (11; 6b) is sealed off from the inner wall of the housing (11; 6b) by means of a sealing element (27) on the outer periphery of the spindle head (14) and forms a pressure chamber (35) of the first cylinder unit (ZE1) that communicates with an outlet (8) for a pressure medium.

10. Disc brake (1) according to claim 9,
**characterised in that**
the spindle head (14) is designed, as the first pressure piston of the first cylinder unit (ZE1), to be longitudinally displaceable together with the spindle (15) in the direction of an adjuster axis (7a, 7'a) back and forth out of a rest position of the adjuster means (7, 7'), in which the outer cone (14a) or other outer contour of the spindle head (14) is in contact with the inner cone (11c; 6d) or mating contour of the housing (11; 6b), into a work end position, which is defined by the sealing disc (19), wherein this stroke of the spindle head (14) corresponds to the previously defined clearance (10).

11. Disc brake (1) according to claim 10,
**characterised in that**
The spindle head (14) of the first cylinder unit (ZE1) is designed to be rotatable about the adjuster axis (7a, 7'a) together with the spindle (15), wherein a rotatability of the spindle head (14) with the spindle (15) in the rest position is blocked on account of a high frictional torque between the outer cone (14a) or the other outer contour of the spindle head (14a) and the inner cone (11c; 6d) or the mating contour.

12. Disc brake (1) according to claim 11,
**characterised in that**
the spindle head (14a) is supported by means of an axial rolling bearing (30) on the sealing disc (19) via a return spring (30a), wherein the return spring (30a) exerts an axial force on the spindle head (14) in the direction of the adjuster axis (7a, 7'a) such that the spindle head (14) is pushed into the rest position, in which its outer cone (14a) or its other outer contour rests firmly against the inner cone (11c; 6d) or the mating contour of the housing (11; 6b).

13. Disc brake (1) according to claim 12,
**characterised in that**
the spindle head (14) comprises a guide portion (14c), which extends through a through-bore (19a) in the sealing disc (19) or in the intermediate base and forms a bearing and axial guide for the spindle head (14) on the sealing disc (19) or intermediate base, wherein a sealing element (29) is provided between the sealing disc (19) or intermediate base and the guide portion (14c).

14. Disc brake (1) according to claim 13,
**characterised in that**
the spindle head (14) comprises at least one axial channel as an overflow channel (36), which connects the pressure chamber (35) of the first cylinder unit (ZE1) to a pressure chamber (37) of the second cylinder unit (ZE2).

15. Disc brake (1) according to claim 14,
**characterised in that**
the second cylinder unit (ZE2) comprises the open space, the piston (16) and the adjuster piston (18) as the second pressure piston, wherein the piston (16) and the adjuster piston (18) can be longitudinally displaced in the open space in the internal bore (11b; 6e), wherein the piston (16) can additionally be rotated about the adjuster axis (7a, 7'a).

16. Disc brake (1) according to claim 15,
**characterised in that**
the pressure chamber (37) of the second cylinder unit (ZE2) is defined in the internal bore (11b; 6e) between end portions of the piston (16) and adjuster piston (18) and sealing disc (19) or intermediate base.

17. Disc brake (1) according to claim 16,
**characterised in that**
the piston (16) is arranged in a through-bore (18f) in the adjuster piston (18) coaxially therewith and with the adjuster axis (7a, 7'a), wherein the adjuster piston (18) is axially fixed on the piston (16) and sealed off therefrom by means of a sealing element (26), and the piston (16) can be rotated about the adjuster axis (7a, 7'a) relative to the adjuster piston (18), wherein the adjuster piston (18) is sealed off from the internal bore (11b; 6e) in the housing (11; 6b) by means of a sealing element (26a).

18. Disc brake (1) according to claim 17,
**characterised in that**
at least one friction spring (25) is provided between the piston (16) and the adjuster piston (18), by means of which friction spring an influenceable frictional torque is generated between the piston (16) and the adjuster piston (18).

19. Disc brake (1) according to claim 18,
**characterised in that**
the adjuster piston (18) is secured against rotation relative to the stationary housing (11; 6b) by means of at least one or more guide elements (20) designed as sliding blocks.

20. Disc brake (1) according to claim 19,
**characterised in that**
the spindle (15) is designed as a threaded spindle having an external thread (15b),
extends through the internal bore (11b; 6e) in the housing (11; 6b) and is engaged via its external thread (15b) with the piston (16) with an internal thread (16b) of the piston (16).

21. Disc brake (1) according to claim 20,
**characterised in that**
the external thread (15b) of the spindle (15) and the internal thread (16b) of the piston (16) are designed to be non-self-locking threads.

22. Disc brake (1) according to claim 20 or 21,
**characterised in that**
a preload spring (31) is provided between the spindle (15) and the piston (16), by means of which preload spring the external thread (15b) of the spindle (15) is axially preloaded relative to the internal thread (16b) of the piston.

23. Disc brake (1) according to any of claims 20 to 22,
**characterised in that**
the internal thread (16b) of the piston (16) extends towards the brake disc (2) from an end portion (16a) of the piston (16) pointing towards the sealing disc (19) and leads into an axial bore (16d), wherein the axial bore is closed in a pressure-tight manner by means of a sealing cap (22) or by means of another sealing method.

24. Disc brake (1) according to claim 23,
**characterised in that**
the pressure chamber (37) of the second cylinder unit (ZE2) is sealed off from the atmosphere by means of the sealing element (26) between the piston (16) and the adjuster piston (18), by means of the sealing element (26a) between the adjuster piston (18) and the internal bore (11b; 6e) in the housing (11; 6b) and by means of the sealing cap (22) in the axial bore (16d) in the piston (16).

25. Disc brake (1) according to any of the preceding claims,
**characterised in that**
the piston (16) is in contact with the brake pad (3, 3') via a pressure portion (17, 17'), wherein the pressure portion (17, 17') comprises a circumferential collar (17b) having a profiled portion (17c) as a force application point for manually resetting the piston (16) by rotating same.

26. Method for adjusting a clearance (10) of a disc brake (1) according to any of the preceding claims, preferably actuated by means of compressed air, in particular for a motor vehicle, comprising a brake disc (2), a brake caliper (3) which engages around the brake disc (2) and in which a clamping device (ZV) is arranged, wherein a brake pad (3, 3') is provided in each case on both sides of the brake disc (2), and comprising an adjuster device having at least one adjuster means (7, 7') for adjusting friction surface wear on the brake pads (3, 3') and brake disc (2), wherein the at least one adjuster means (7, 7') can be operated independently of the clamping device (ZV) by means of a pressure medium,
**characterised by**
the method steps of
S1 activating the adjuster means (7, 7') by applying a pressure medium, and moving a spindle head (14) of the first cylinder unit (ZE1) from a rest position;
S2 establishing whether the spindle head (14) reaches a work end position in the first cylinder unit (ZE1);
S3 restoring the clearance (10), previously defined by the design in the first cylinder unit (ZE1), by means of the first cylinder unit (ZE1) by removing the air from the adjuster means (7, 7') if the work end position has been reached and the brake pad (3, 3') is already resting against the brake disc (2) and a current clearance (10a) has become zero; or
S4 moving a piston (16) and a working piston (18) connected thereto by means of the second cylinder unit (ZE2) if the work end position has been reached and the brake pad (3, 3') is not yet resting against the brake disc (2) on account of an excessively large clearance (10b); and
S5 restoring the clearance, previously defined by the design in the first cylinder unit (ZE1), by means of the first cylinder unit (ZE1) by removing the air from the adjuster means (7, 7') if the brake pad (3, 3') is resting against the brake disc (2) and a current clearance (10a) has become zero; or
S6 further moving the spindle head (14) out of an intermediate position by means of the first cylinder unit (ZE1) if the spindle head (14) has not yet reached the work end position and the brake pad (3, 3') is resting against the brake disc (2) on account of an excessively small clearance (10d) and a current clearance (10a) has become zero; and
S7 restoring the clearance (10), previously defined by the design in the first cylinder unit (ZE1), by means of the first cylinder unit (ZE1) by removing the air from the adjuster means (7, 7') if the spindle head (14) has reached the work end position.

27. Method according to claim 26,
**characterised in that,**
in method step S4, the excessively large clearance (10b) is reduced **in that** a spindle (15) that is axially blocked in the work end position by means of the spindle head (14) connected thereto rotates about an adjuster axis (7a, 7'a) on account of the movement of the piston (16) and adjuster piston (18) caused by non-self-locking thread engagement between the spindle (15) and the piston (16), said rotation of the spindle taking place until the piston (16) and the adjuster piston (18) have brought the brake pad (3, 3') to rest against the brake disc (2).

28. Method according to claim 26 or 27,
**characterised in that,**
in method step S6, the excessively small clearance (10d) is increased **in that** a spindle (15) that can be axially moved in the intermediate position is moved on account of the movement of the spindle head (14) connected thereto and rotates on account of non-self-locking thread engagement between the spindle (15) and the blocked piston (16) until the spindle head (14) reaches the work end position.

29. Method according to any of claims 26 to 28,
**characterised in that,**
in method steps S3, S5 and S7, the spindle head (14) is moved back from the work end position into the rest position by means of a return spring (30a) after the air removal, wherein the clearance (10), previously defined by the design in the first cylinder unit (ZE1),
is restored.

## Revendications

1. Frein (1) à disque, de préférence à actionnement par l'air comprimé, notamment pour un véhicule automobile, comprenant un disque (2) de frein, un étrier (6) de frein, qui chevauche le disque (2) de frein, et dans lequel est monté un système (ZV) de serrage, dans lequel il est prévu respectivement une garniture (3, 3') de frein de part et d'autre du disque (2) de frein, et comprenant un système de rattrapage ayant au moins un dispositif (7, 7') de rattrapage pour le rattrapage d'une usure de surface de friction sur les garnitures (3, 3') de frein et sur le disque (2) de frein, dans lequel le au moins un dispositif (7, 7') de rattrapage peut fonctionner par un fluide sous pression indépendamment du dispositif (ZV) de serrage,
dans lequel
le au moins un dispositif (7, 7') de rattrapage est constitué en ayant une première unité (ZE1) de cylindre ayant un premier piston de pression, **caractérisé**
**en ce que** le au moins un dispositif (7, 7') de rattrapage est constitué en ayant une deuxième, unité (ZE2) de cylindre ayant un deuxième piston de pression, le deuxième piston de pression de la deuxième unité (ZE2) de cylindre ayant un piston (16), qui est en contact avec la garniture (3, 3') de frein, et un piston (18) de rattrapage, qui est monté sur le piston (16).

2. Frein (1) à disque suivant la revendication 1,
**caractérisé en ce que**
une course du premier piston de pression de la première unité (ZE1) de cylindre correspond à un jeu (10) des garnitures fixé au préalable du frein (1) à disque.

3. Frein (1) à disque suivant la revendication 2,
**caractérisé en ce que**
le au moins un dispositif (7) de rattrapage comprend un boîtier (11 ; 6b) fixe en position et ayant un trou (11b ; 6e) intérieur, une tête (14) de broche, une broche (15), un piston (16), un piston (18) de rattrapage et une rondelle (19) d'étanchéité.

4. Frein (1) à disque suivant la revendication 3,
**caractérisé en ce que**
le boîtier (6b) à poste fixe est une partie (6b) arrière de l'étrier (6) de frein, le trou (6e) intérieur étant formé dans la partie (6b) arrière.

5. Frein (1) à disque suivant la revendication 3 ou 4,
**caractérisé en ce que**
la première unité (ZE1) de cylindre et la deuxième unité (ZE2) de cylindre sont montées en série dans le boîtier (11 ; 6b) et sont séparées par la rondelle (19) d'étanchéité ou par un fond intermédiaire fixe.

6. Frein (1) à disque suivant la revendication 5,
**caractérisé en ce que**
la rondelle (19) d'étanchéité ou le front intermédiaire fixe sépare le trou (11b ; 6^{e}) intérieur en un espace sensiblement fermé entre la rondelle (19) d'étanchéité ou le fond intermédiaire fixe et une paroi (11f ; 6f) de fond du boîtier (11 ; 6b) et en un espace ouvert entre la rondelle (19) d'étanchéité et une ouverture du trou (11b) intérieur, tournée vers le disque (2) de frein, la rondelle (19) d'étanchéité étant rendue étanche au moyen d'un élément (28) d'étanchéité sur son pourtour extérieur par rapport au trou (11b ; 6e) intérieur.

7. Frein (1) à disque suivant la revendication 6,
**caractérisé en ce que**
la première unité (ZE1) de cylindre a comme premier piston de pression l'espace fermé et la tête (14) de la broche, la tête (14) de la broche étant reliée à la broche (15) et la broche (15) est dans la deuxième unité (ZE2) de cylindre en prise avec le deuxième piston de pression.

8. Frein (1) à disque suivant la revendication 7,
**caractérisé en ce que**
la tête (14) de la broche est pourvue d'un cône (14) extérieur ou d'un autre contour extérieur, tourné vers la paroi (11f ; 6f) de fond du boîtier (11 ; 6b), dans lequel du côté intérieur de la paroi (11f ; 6f) du fond est disposé un cône (11c ; 6d) intérieur ou un contour antagoniste correspondant à l'autre contour extérieur, qui communique avec le cône (14a) extérieur ou avec l'autre contour extérieur de la tête (14) de la broche.

9. Frein (1) à disque suivant la revendication 8,
**caractérisé en ce que**
une partie, comprise entre le cône (14a) extérieur ou l'autre contour extérieur de la tête (14) de la broche et le cône (11c ; 6d) intérieur ou le contour antagoniste du boîtier (11 ; 6b) est, au moyen d'un élément (27) d'étanchéité sur le pourtour extérieur de la tête (14) de la broche, rendue étanche par rapport à la paroi intérieure du boîtier (11 ; 6b) et forme un espace (35) de pression de la première unité (ZE1) de cylindre, qui communique avec un raccord (8) pour un fluide sous pression.

10. Frein (1) à disque suivant la revendication 9,
**caractérisé en ce que**
la tête (14) de la broche est, en tant que premier piston de pression de la première unité (ZE1) de cylindre, constituée de manière à pouvoir se déplacer longitudinalement en revenant ensemble avec la broche (15) en direction d'un axe (7a, 7'a) de rattrapage, d'une position de repos du dispositif (7, 7') de rattrapage, dans laquelle la tête (14) de la broche est par son cône (14) extérieur ou son autre contour extérieur en contact avec le cône (11c ; 6d) intérieur ou le contour antagoniste du boîtier (11 ; 6b), à une position finale de travail, qui est fixée par la rondelle (19) d'étanchéité, cette course de la tête (14) de la broche correspondant au jeu (10) de garniture fixé au préalable.

11. Frein (1) à disque suivant la revendication 10,
**caractérisé en ce que**
la tête (14) de la broche de la première unité (ZE1) de cylindre est ensemble avec la broche (15) constituée de manière à pouvoir tourner autour de l'axe (7a, 7'a) de rattrapage, une possibilité de tourner de la tête (14) de la broche avec la broche (15) dans la position de repos étant bloquée en raison d'un grand couple de frottement entre le cône (14a) extérieur ou l'autre contour extérieur de la tête (14a) de la broche et le cône (11c ; 6d) intérieur ou le contour antagoniste.

12. Frein (1) à disque suivant la revendication 11,
**caractérisé en ce que**
**en ce que** la tête (14a) de la broche est appuyée par un palier (30) axial à roulement, par l'intermédiaire d'un ressort (30a) de rappel, à la rondelle (19) d'étanchéité, le ressort (30a) de rappel appliquant une force axiale en direction de l'axe (7a, 7'a) de rattrapage à la tête (14) de la broche de manière à ce que la tête (14) de la broche soit poussée dans la position de repos, dans laquelle son cône (14a) extérieur ou son autre contour extérieur s'applique fixement au cône (11 ; 6d) intérieur ou au contour antagoniste du boîtier (11 ; 6b).

13. Frein (1) à disque suivant la revendication 12,
**caractérisé en ce que**
la tête (14) de la broche a une partie (14c) de guidage, qui s'étend dans un trou (19a) traversant de la rondelle (19) d'étanchéité ou du fond intermédiaire et forme un support et un guidage axial de la tête (14) de la broche sur la rondelle (19) d'étanchéité ou sur le fond intermédiaire, un élément (29) d'étanchéité étant prévu entre la rondelle (19) d'étanchéité ou le fond intermédiaire et la partie (14c) de guidage.

14. Frein (1) à disque suivant la revendication 13,
**caractérisé en ce que**
la tête (14) de la broche a au moins un conduit axial comme conduit (36) de trop plein, qui met l'espace (35) sous pression de la première unité (ZE1) de cylindre en communication avec un espace (37) sous pression de la deuxième unité (ZE2) de cylindre.

15. Frein (1) à disque suivant la revendication 14,
**caractérisé en ce que**,
la deuxième unité (ZE2) de cylindre comprend l'espace ouvert, le piston (16) et le piston (18) de rattrapage comme deuxième piston de pression, le piston (16) et le piston (18) de rattrapage pouvant coulisser longitudinalement dans l'espace ouvert dans le trou (11b ; 6e) intérieur, le piston (16) pouvant tourner en outre autour de l'axe (7a ; 7'a) de rattrapage.

16. Frein (1) à disque suivant la revendication 15,
**caractérisé en ce que**
l'espace (37) sous pression de la deuxième unité (ZE2) de cylindre est fixé dans le trou (11b ; 6e) intérieur entre des parties d'extrémité du piston (16) et du piston (18) de rattrapage et la rondelle (19) d'étanchéité ou le fond intermédiaire.

17. Frein (1) à disque suivant la revendication 16,
**caractérisé en ce que**
le piston (16) est monté dans un trou (18f) traversant du piston (18) de rattrapage co-axialement à celui-ci et à l'axe (7a, 7'a) de rattrapage, le piston (18) de rattrapage étant fixé axialement sur le piston (16) et étant rendu étanche par rapport à celui-ci par un élément (26) d'étanchéité, et le piston (16) peut tourner par rapport au piston (18) de rattrapage autour de l'axe (7a , 7'a) de rattrapage, le piston (18) de rattrapage étant rendu étanche par rapport au trou (11b ; 6^{e}) intérieur du boîtier (11 ; 6b) par un élément (26a) d'étanchéité.

18. Frein (1) à disque suivant la revendication 17,
**caractérisé en ce que**
il est prévu entre le piston (16) et le piston (18) de rattrapage au moins un ressort (25) de friction, au moyen duquel est produit un couple de frottement pouvant être influencé entre le piston (16) et le piston (18) de réglage.

19. Frein (1) à disque suivant la revendication 18,
**caractérisé en ce que**
le piston (18) de rattrapage est empêché de tourner par rapport au boîtier (11 ; 6b) à poste fixe par au moins un ou plusieurs éléments (20) de guidage constitués sous la forme de clavettes de guidage.

20. Frein (1) à disque suivant la revendication 19,
**caractérisé en ce que**
la broche (15) est constituée sous la forme d'une broche filetée ayant un filetage (15b) extérieur, s'étend dans le trou (11b ; 6e) intérieur du boîtier (11 ; 6b) et est en prise avec le piston (16) par son filetage (15b) extérieur avec un taraudage (16b) du piston (16).

21. Frein (1) à disque suivant la revendication 20,
**caractérisé en ce que**
le filetage (15b) extérieur de la broche (15) et le taraudage (16b) du piston (16) sont réalisés sous la forme de filet non autobloquant.

22. Frein (1) à disque suivant la revendication 20 ou 21,
**caractérisé en ce que**
il est prévu un ressort (31) de précontrainte entre la broche (15) et le piston (16), au moyen duquel le filetage (15b) extérieur de la broche (15) est précontraint axialement par rapport au taraudage (16b) du piston.

23. Frein (1) à disque suivant l'une des revendication 20 à 22,
**caractérisé en ce que**
le taraudage (16b) du piston (16) s'étend d'une partie (16a) d'extrémité du piston (16), tournée vers la rondelle (19) d'étanchéité, en direction du disque (2) de frein et débouche dans un trou (16d) axial, le trou axial étant fermé d'une manière étanche à la pression par un capuchon (22) d'étanchéité ou par un autre procédé d'étanchéité.

24. Frein (1) à disque suivant la revendication 23,
**caractérisé en ce que**
l'espace (37) sous pression de la deuxième unité (ZE2) de cylindre est rendu étanche vis-à-vis de l'atmosphère par l'élément (26) d'étanchéité entre le piston (16) et le piston (18) de rattrapage, par l'élément (26a) d'étanchéité entre le piston (18) de rattrapage et le trou (11b ; 6e) intérieur du boîtier (11 ; 6b) et par le capuchon (22) d'étanchéité dans le trou (16d) axial du piston (16).

25. Frein (1) à disque suivant l'une des revendications précédentes,
**caractérisé en ce que**
le piston (16) est, par une partie (17, 17') d'application d'une pression, en contact avec la garniture (3, 3') de frein, la partie (17, 17') d'application d'une pression ayant un collet (17b) faisant le tour et ayant un profilage (17c) comme application d'une force pour un rappel manuel par rotation du piston (16).

26. Procédé de réglage d'un jeu (10) de garniture d'un frein (1) à disque suivant l'une des revendications précédentes, de préférence à actionnement par l'air comprimé, notamment pour un véhicule automobile, comprenant un disque (2), de frein, un étrier (6) de frein, qui chevauche le disque (2) de frein, et dans lequel est monté un système (ZV) de serrage, dans lequel il est prévu respectivement une garniture (3, 3') de frein de part et d'autre du disque (2) de frein, et comprenant un système de rattrapage ayant au moins un dispositif (7, 7') de rattrapage pour le rattrapage d'une usure de surface de friction sur les garnitures (3, 3') de frein et sur le disque (2) de frein, dans lequel le au moins un dispositif (7, 7') de rattrapage peut fonctionner par un fluide sous pression indépendamment du dispositif (ZV) de serrage,
**caractérisé par**
les stades de procédé
S1 Activation du disposition (7, 7') de rattrapage par alimentation en un fluide sous pression et déplacement d'une tête (14) de broche de la première unité (ZE1) de cylindre à partir d'une position de repos ;
S2 Constatation du point de savoir si la tête (14) de la broche a atteint une position finale de travail dans la première unité (ZE1) de cylindre ;
S3 Réglage à nouveau du jeu (10) de garniture fixé par construction au préalable dans la première unité (ZE1) de cylindre, par la première unité (ZE1) de cylindre, par mise à l'atmosphère du dispositif (7, 7') de rattrapage, si la position finale de travail est atteinte et si la garniture (3, 3') de frein s'applique déjà au disque (2) de frein et si un jeu (10a) de garniture en cours est devenu nul; ou
S4 Déplacement par la deuxième unité (ZE2) de cylindre, d'un piston (16) et d'un piston (18) de travail qui y est relié, si la position finale de travail est atteinte et si la garniture (3, 3') de frein, en raison d'un jeu (10b) de garniture trop grand, ne s'applique pas encore au disque de frein ; et
S5 Réglage à nouveau, par la première unité (ZE1) de cylindre, par mise à l'atmosphère du dispositif (7, 7') de rattrapage, du jeu (10) de garniture fixé par construction au préalable dans la première unité (ZE1) de cylindre, si la garniture (3, 3') de frein s'applique au disque (2) de frein et si un jeu (10a) de garniture en cours est devenu nul ;ou
S6 Réglage à nouveau de la tête (14) de la broche à partir d'une position intermédiaire par la première unité (ZE1) de cylindre, si la tête (14) de la broche n'a pas encore atteint la position finale de travail et si la garniture (3, 3') de frein, en raison d'un jeu (10d) de garniture trop petit, s'applique au disque (2) de frein et si un jeu (10a) de garniture en cours est devenu nul; et
S7 Réglage à nouveau par la première unité (ZE1) de cylindre, par mise à l'atmosphère du dispositif (7, 7') de rattrapage, du jeu (10) de garniture fixé par construction au préalable dans la première (ZE1) de cylindre, si la tête (14) de la broche a atteint la position finale de travail.

27. Procédé suivant la revendication 26,
**caractérisé en ce que**,
dans le stade S4 du procédé, un rapetissement du jeu (10b) de garniture trop grand a lieu par le fait qu'une broche (15) bloquée axialement dans la position finale de travail par la tête (14) de broche qui lui est reliée, tourne autour d'un axe (7a, 7'a) de rattrapage par le déplacement du piston (16) et du piston (18) de rattrapage provoqué par une prise sans autoblocage entre la broche et le piston, jusqu'à ce que le piston (16) et le piston (18) de rattrapage aient mis la garniture (3, 3') de frein en application sur le disque (2) de frein.

28. Procédé suivant la revendication 26 ou 27,
**caractérisé en ce que**,
dans le stade S6 du procédé, un agrandissement du jeu (10d) de garniture trop petit a lieu par le fait qu'une broche (15) déplaçable axialement dans la position intermédiaire est déplacée par le déplacement de la tête (14) de la broche qui lui est reliée et tourne par une prise sans autoblocage de la broche (15) et du piston (16) bloqué, jusqu'à ce que la tête (14) de la broche ait atteint la position finale de travail.

29. Procédé suivant l'une des revendications 26 à 28, **caractérisé en ce que**,
dans les stades S3, S5 et S7 du procédé, la tête (14) de la broche est, après la mise à l'atmosphère, rappelée de la position finale de travail à la position de repos au moyen d'un ressort (30a) de rappel, le jeu (10) de garniture fixé au préalable par construction dans la première unité (ZE1) de cylindre étant réglé à nouveau.
